# EUROPEAN PATENT SPECIFICATION

(11) **EP 3 251 894 B1**
(45) Date of publication and mention of the grant of the patent: **12.01.2022**
(21) Application number: 17174381.8
(22) Date of filing: 02.06.2017
(51) Int. Cl.: B60P 3/32, B62D 33/06, B62D 33/067

(54) **VERBETERDE RUIMTE-VERBINDENDE INRICHTING VOOR PASSAGIERSTRANSPORTMIDDEL**
PASSAGEWAY FOR A PERSON TRANSPORT VEHICLE
PASSAGE POUR UN VÉHICULE DE TRANSPORT INDIVIDUEL

(30) Priority: 02.06.2016 BE 201605410; 02.06.2016 BE 201605411; 02.06.2016 BE 201605412; 02.06.2016 BE 201605413
(43) Date of publication of application: 06.12.2017
(60) Divisional application: 21176606.8
(73) Proprietor: Mercury Trading bvba, 8830 Hooglede (BE)
(72) Inventor: JONCKHEERE, Patrick, 8300 Knokke-Heist (BE)
(74) Representative: Rogiest, Wouter

(56) References cited:
- US-A- 3 837 700
- US-A- 4 183 573
- US-A- 4 378 856
- US-A- 4 940 278
- US-A- 5 280 984

## Description

### TECHNICAL DOMAIN

The invention relates to a means of transport, in particular a passenger transport means such as a bus, a touring car or an ambulance.

### STATE OF THE ART

A problem with the known design of buses is the lack of modularity. The passenger compartment with equipment for passengers and the front side with on the one hand the motor and on the other hand the driver's compartment are clearly delimited in space, but are incorporated into one integral assembly, which leads to problems when one of said parts fails, and thus prevents the use of the other parts. When, for example, the motor fails, a passenger compartment is taken out of use for the time necessary for repairing or replacing the motor, even when the passenger compartment is in excellent condition. Also, the opposite case, in which the passenger compartment is taken out of use while the motor is still functioning perfectly, is a common problem. This leads to a lack of use of available resources, and thus a waste of capacity, leading to financial loss. An adequate solution for this problem is a modular design, in which the front side of the means of transport and the passenger compartment are separate modules that are fabricated essentially separately and are only connected to each other just before taking the vehicle into service.

Another embodiment of trucks is a type with cab-over-engine and a tilting cabin. This type of trucks is in particular common for freight transport, the use for passenger transport is less common, but it is also possible. In a cab-over-engine, the cabin is placed as much as possible to the front of the vehicle and the motor is placed under de cabin, which amongst other things has the advantage that the front part becomes shorter and thus the cargo space becomes larger. Hereby, the cabin is tilting, i.e. in standstill of the vehicle, the cabin can be tilted forward and thus the motor can be made accessible for maintenance and repair works.

Document DE3526766A1 describes an embodiment of a truck that is based on a design of a passenger compartment on the chassis of a truck with cab-over-engine and a tilting cabin. The chassis of the vehicle hereby belongs to the truck part. The cabin comprises the steering wheel, all buttons, pedals and handles that are necessary to drive the truck, as well as the seats for the driver and a passenger. The passenger compartment comprises seats for passengers. However, the cabin is connected via an opening in the rear wall to the passenger compartment, which also has an opening in the front wall oriented towards the cabin. A seal around said openings provides for a sealing closed off from the outside world. In the area of the foremost front wall, the driver's compartment of the vehicle is mounted onto the chassis, so that it can rotate around an axis parallel to a supporting surface and perpendicular to the driving direction, so that access can be provided to the motor and accessory instruments that are placed under the floor during maintenance works. The disadvantage of such design is the difficult manipulation to be able to loosen the sealing arrangement of the driver's compartment and to tilt the driver's compartment. Moreover, a good sealing is not guaranteed in an embodiment according to DE3526766A1.

Document AT406573B describes a box construction for a commercial vehicle, in particular a fire engine, in which a passage between the cabin of the driver and the box construction is provided between the driver's compartment and a transverse supporting element at the front end of the box construction. A sealing member is provided, but is not capable of absorbing different kinds of vibrations in an adequate way. A transition and sealing member of this kind is a very complex system if the cabin is meant to be made tilting.

Document US7213872 also describes an embodiment of a truck that is based on a design of a passenger's compartment onto the chassis of a truck with cab-over-engine and a tilting cabin, in particular of a fire engine. Again, a passage is provided between the cabin of the driver and the passenger's compartment. Around both openings, there is a bellows-shaped sealing member provided with armours and magnet contacts, whether or not supplemented with an attachment arm with contact spring or a combination of rubber bumpers. At the roof, an L-shaped labyrinth is also provided for protecting the sealing member against rainwater. The suggested sealing member is however difficult to use in practice, because on the one hand it is complex and is composed of too diverse types of materials and components, increasing the risk of failure, and on the other hand because the torsion forces acting onto the sealing element, are absorbed insufficiently. Moreover, in use, the sealing member suffers too much from the weather and wind, because the L-shaped labyrinth is designed in a too simple way, and wind and especially rainwater can easily access the sealing member.

Document US 4 378 856 A discloses arrangement including a passageway connection of the type for use in interconnecting the interior of a vehicle driver's cab and the interior of a sleeper unit mounted behind the cab comprising an outer accordian seal and an inner boot member. The outer accordian seal is mounted surrounding an external side of openings in the front and rear walls respectively, of a sleeper unit and driver's cab so as to provide a detachable water tight seal, while the inner boot member provides sound and temperature insulation as well as an attractive smooth appearance, and also coacting with a detachable end of the outer accordian seal so as to retain same in its assembled condition.

Document US 5 280 984 A discloses a boot assembly and method for lining at least a portion of the periphery of a passageway between two compartments of a vehicle. The boot assembly includes a boot body portion formed to extend between the securement devices having opposed, first and second shoulders. The securement devices are mounted proximate an opening formed in each opposed wall of the two compartments. A retaining structure is provided on the body portion to secure the body portion to the securement devices.

Document US 4 183 573 A discloses a boot protection and antitheft apparatus which protects the flexible hollow boot extending between an opening in the forward surface of a camper shell and the rear window frame of a pickup truck cab. The apparatus includes two side members, which are substantially mirror images of each other, each of which includes a flat panel for substantially closing the opening between the truck cab and the camper shell and an angularly depending rectangular flange intersecting along one of the edges of each panel for facilitating attachment to the cab of the pickup truck.

In a second aspect, the invention relates to an improved floor for attaching the equipment for the passengers. The device is constructed as a floor plate or floor slab and consists of portions of rail and portions of floor attached to the floor of the passenger's compartment of the passenger transport means.

The purpose of the present invention is to provide a means of transport, namely a passenger transport means, that is easy to work with during maintenance and during use and that is reliable in different conditions of use. The present invention aims to find a solution for at least some of the above-mentioned problems.

### SUMMARY

The purpose of the invention is achieved as a result of the following characteristics. A passenger transport means is designed in a modular way from a truck with a cab-over-engine and a tilting cabin and a passenger's compartment. Both modules are made available separately, and are only connected to each other just before taking it into service, in which the passenger's compartment is mounted onto the chassis of the truck.

The cabin comprises the steering wheel, all buttons, pedals and handles that are necessary to drive the truck, as well as the seats for the driver and a passenger. The passenger compartment comprises seats for passengers. However, the cabin is connected via an opening in the rear wall to the passenger compartment, which also has an opening in the front wall oriented towards the cabin. A sealing member around said openings provides for a passage that is closed-off circumferentially between the cabin and the passenger's compartment in the form of a large open window, i.e. a window opening with a glass. In the area of the foremost front wall, the driver's compartment of the vehicle is mounted onto the chassis, so that it can rotate around an axis parallel to a supporting surface and perpendicular to the driving direction, so that access can be provided to the motor and accessory instruments that are placed under the floor during maintenance works.

In a first aspect, the invention provides for a space-connecting device (3) for a passenger transport means (1) comprising a driver's compartment (2) and a passenger's compartment (4), in which said space-connecting device (3) is adapted for connecting a first opening of said driver's compartment (2) to a second opening of said passenger's compartment (4), in which said driver's compartment (2) and said passenger's compartment (4) are attached to one and the same chassis (6) of said passenger transport means (1), in which said driver's compartment (2) is tilting and is of the type of cab-over-engine, in which said space-connecting device (1) comprises an adapter window (37), in which said adapter window (37) is wedge-shaped, preferably in an angle α between 1 degree and 35 degrees, more preferably between 2 degrees and 20 degrees.

An important advantage of such a wedge-shaped embodiment of the adapter window 37 is the important mechanical characteristics, including a better attachment, in particular when the driver's compartment 2 is tilted downwards or upwards, but also when it is in a non-tilting status. Hereby, the front wall 34 of a passenger's compartment 4 is attached via a flexible-relating bulge 75, in which said flexible-relating bulge is adapted to make a flexible connection with a portion of said flexible window 76, preferably with the complete circumference of said flexible window 76.

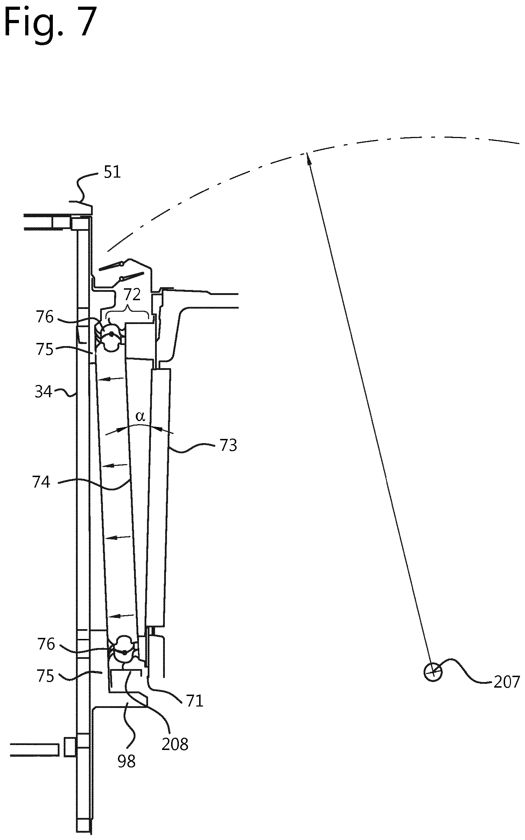

Fig. 7 shows a view that illustrates the advantages of the wedge-shaped character of the adapter window 37 very well. The advantageous mechanic characteristics include a better adaptability to the position of the pivot axis 207, which is not amongst other things located laterally with respect to the space-connecting device 3. Because of this lateral position, one must consider the turning radius of the driver's compartment 2, and the adapter window 37 must not be positioned transversely to the longitudinal direction, but in an acute angle a, as a result of which the adapter window 37 is wedge-shaped. This allows to transfer the forces that are applied when tilting downwards in a more equal way to portions of the passenger's compartment, illustrated in Fig. 7 with different arrows. Also, when the passenger transport means is in a non-tilted status, the wedge-shaped character is advantageous, as the suspension of the driver's compartment also generates vibrations in the direction tangential to the turning radius. Because of the wedge-shaped character, these vibrations can also be better transferred to portions of the passenger's compartment, with also a better connection of the adapter window 37 at portions that are permanently connected to the passenger's compartment 4, such as e.g. a flexible-relating bulge 75.

In a second aspect, the invention provides for a passenger transport means (1) comprising a driver's compartment (2), a passenger's compartment (4) and a space-connecting device (3), in which said space-connecting device (3) is adapted for connecting a first opening of said driver's compartment (2) to a second opening of said passenger's compartment (4), in which said driver's compartment (2) and said passenger's compartment (4) are attached to one and the same chassis (6) of said passenger transport means (1), in which said driver's compartment (2) is tilting and is of the type of cab-over-engine, in which said space-connecting device (1) comprises an adapter window (37), and in which said adapter window (37) is wedge-shaped, preferably in an angle α between 1 degree and 35 degrees, more preferably between 2 degrees and 20 degrees.

The advantages of such means of transport are similar to the advantages of the space-connecting device.

In a third aspect, the invention relates to a flexible window (76) for a passenger transport means (1), said passenger transport means (1) comprising a driver's compartment (2), a passenger's compartment (4) and a space-connecting device (3), in which said space-connecting device (3) is adapted for connecting a first opening of said driver's compartment (2) to a second opening of said passenger's compartment (4), in which said driver's compartment (3) and said passenger's compartment (4) are attached to one and the same chassis (6) of said passenger transport means (1), in which said driver's compartment (1) is tilting and of the type cab-over-engine, in which said space-connecting device (3) comprises said flexible window (76), in which said flexible window (76) is adapted to be attached in the vicinity of said first opening, in which said flexible window (76) closes off said first opening and said second opening, in which said flexible window (76) is provided with a profile-relating bulge (86) and/or a profile-relating bulge (87) adapted for attachment to a window profile (80), in which said window profile (80) is preferably made of metal.

The advantage of such flexible window is the simple connection of the space-connecting device, in which the flexible window is attached to the second opening in a non-permanent way, while the profile ensures a permanent attachment of the flexible window around the first opening. Such an easy solution is not known in the state of the art, amongst other things because the advantageous technical characteristics of the flexible window according to the present invention are not obvious.

In a fourth aspect, the invention relates to a use of a flexible window (76) according to said claim 14 for a passenger transport means (1), said passenger transport means (1) comprising a driver's compartment (2), a passenger's compartment (4) and a space-connecting device (3), in which said space-connecting device (3) is adapted for connecting a first opening of said driver's compartment (2) to a second opening of said passenger's compartment (4), in which said driver's compartment (3) and said passenger's compartment (4) are attached to one and the same chassis (6) of said passenger transport means (1), in which said driver's compartment (1) is tilting and of the type cab-over-engine, in which said space-connecting device (3) comprises said flexible window (76), in which said flexible window (76) is adapted to be attached in the vicinity of said first opening, in which said flexible window (76) closes off said first opening and said second opening.

The advantages of such a use are similar to that of the flexible window.

Further embodiments and their respective advantages are described in the detailed description and claims.

### DESCRIPTION OF THE FIGURES

**Figure 1** illustrates an embodiment of the present invention according to example 1.
**Figure 2** illustrates an embodiment of the present invention according to example 1.
**Figure 3** illustrates an embodiment of the present invention according to example 2.
**Figure 4** illustrates an embodiment of the present invention according to example 2.
**Figure 5** illustrates an embodiment of the present invention according to example 2.
**Figure 6** illustrates an embodiment of the present invention according to example 2.
**Figure 7** illustrates an embodiment of the present invention according to example 2 and 3.
**Figure 8** illustrates an embodiment of the present invention according to example 3.
**Figure 9** illustrates an embodiment of the present invention according to example 3.
**Figure 10** illustrates an embodiment of the present invention according to example 4.
**Figure 11** illustrates an embodiment of the present invention according to example 4.
**Figure 12** illustrates an embodiment of the present invention according to example 4.
**Figure 13** illustrates an embodiment of the present invention according to example 2.
**Figure 14** illustrates an embodiment of the present invention according to example 2.

### DETAILED DESCRIPTION

Unless otherwise specified, all terms used in the description of the invention, including technical and scientific terms, shall have the meaning as they are generally understood by the worker in the technical field of the invention. For a better understanding of the description of the invention, the following terms are explained specifically.

"A", "an" and "the" refer in the document to both the singular and the plural form unless clearly understood differently in the context. "A segment" means for example one or more than one segment.

In the context of this document, the following terms are used interchangeably: "water dam" and "dam", "water collector" and "collector", "driver's compartment" and "cabin", "passenger's cabin" and "passenger's compartment".

The chassis is the supporting part of the truck, to which the power train, wheel suspension and body are mounted. Both the cabin and the passenger's compartment are mounted thereto.

The terms "include", "including", "consist", "consisting", "provide with", "contain", "containing", "comprise", "comprising" are synonyms and are inclusive of open terms that indicate the presence of what follows, and that do not exclude or prevent the presence of other components, characteristics, elements, members, steps, known from or described in the state of the art.

The citation of numeric intervals by means of end points includes all integers, fractions and/or real numbers between the end points, including these end points.

In a preferred embodiment, said adapter window (3) comprises a flexible window (76) that is adapted for being attached in the vicinity of said first opening, in which said flexible window (76) circumferentially closes off said first opening and said second opening.

In a further embodiment, said flexible window (76) is made of a flexible material, preferably rubber, said flexible window (76) is provided with a profile-relating indentation (86) and/or a profile-relating bulge (87) adapted for attachment to a window profile (80), in which said window profile (80) is preferably made of metal.

In a further preferred embodiment, said flexible window is self-supporting, preferably in which said adapter window (3) comprises a reinforcing inner finger (204, 205) that is made of the same said flexible material, preferably in which said inner finger (204, 205) is made as an integral part of the flexible window (76).

In a further preferred embodiment, said flexible window (76) comprises a flexible finger (82, 83, 84, 85) for keeping a connecting realized by said flexible window (76) free from dust and water. Such a finger preferably extends in the length of a leg of the flexible window. Such a finger is advantageous because it has a sharp end, better allowing to realize a barrier against dust, liquids, cold, sun and gases such as flue gases.

In a further preferred embodiment, said flexible window is self-supporting, preferably in which said adapter window (3) comprises a reinforcing inner finger (204, 205) that is made of the same said flexible material, preferably in which said inner finger (204, 205) is made as an integral part of the flexible window (76). The advantage of a self-supporting flexible window is clear, and is in contrast with a solution from the state of the art as disclosed by US 7,213,872. US 7,213,872 indeed discloses the need for bowed metal reinforcement ribs. The presence of such reinforcement ribs is disadvantageous because it is more complex, but also because these ribs have another thermal expansion than the surrounding material, as a result of which premature wear or even cracks can appear at the transition.

In a further preferred embodiment, said flexible window (76) comprises a liquid-guiding finger (202) that is free-standing with respect to said driver's compartment (2) and said passenger's compartment (4) and is adapted for guiding liquid according to a transverse direction to said passenger transport means (1). The advantage of the liquid guiding flexible finger (202) is more easily to understand by means of Fig. 7. The liquid-guiding finger (202) indeed guides the rainwater that still gets to upper portions 72 of the flexible window 76 despite the double barrier offered by the labyrinth. A large part of the water that in this way reaches the flexible window 76 is thus guided in the transverse direction, in which the liquid-guiding finger 202 forms an upstanding wall of a "gutter". A second advantage of the liquid-guiding finger 202 is that it can facilitate the contact with the collar 208, offering a supporting effect to the flexible window 76, with a reduced risk of sagging.

In a further preferred embodiment, said adapter window (27) comprises an impact absorbing element (77), more preferably four impact absorbing elements (77). The presence of such an impact absorbing element advantageously adds to the wedge-shaped design of said adapter window 37. Considering the type of suspension of said driver's compartment 2 adapted for a tilting cabin, the wedge-shaped design ensures that possible impacts from the driver's compartment 2 are transferred as much as possible to a direction perpendicular to the plane of a receiving surface, such as an inclined impact-receiving element 81 belonging to the passenger's compartment 4, in which said impacts are transferred via said impact absorbing element 77.

A further preferred embodiment comprises a labyrinth (36) adapted for protecting said connection of the first opening with the second opening, characterized in that said labyrinth (36) comprises a driver's compartment relating element (62) and a passenger's compartment relating element (63),
- in which said driver's compartment relating element (62) is attached to a first side wall edge and/or a second side wall edge and/or a first roof edge and/or a rear wall edge of said driver's compartment (2) and comprises a bulge extending at least partially over said connection;
- in which said passenger's compartment relating element (63) is attached to a third side wall edge and/or a fourth side wall edge and/or a second roof edge and/or a front wall edge of said passenger's compartment (4) and comprises a bulge extending at least partially over said connection.

This is advantageous because, contrary to the state of the art according to US 7,213,872, not one, but two separate elements, i.e. said driver's compartment relating element (62) and said passenger's compartment relating element (63), are provided. This ensures a superior protection.

In a further preferred embodiment, said driver's compartment relating element (62) and said passenger's compartment relating element (63) do not abut in any tilting angle. This is advantageous because it allows to make said driver's compartment relating element (62) and said passenger's compartment relating element (63) in a durable and non-flexible material, such as metal.

In a further preferred embodiment, said bulge of said driver's compartment relating element comprises an end that is connected to a first flexible fingertip-shaped element (68), said bulge of said passenger's compartment relating element (63) comprises an end that is connected to a second flexible fingertip-shaped element (68), and said first and second fingertip-shaped elements (68) are adapted to abut at said tilting of said driver's compartment (2), in which said first and second flexible fingertip-shaped element (68) preferably comprises rubber. This is advantageous because the distance between said driver's compartment relating element (62) and said passenger's compartment relating element (63) can be further reduced in this way, which can in turn improve the degree of sealing and protection against external influences.

In a further preferred embodiment, said space-connecting device (3) comprises a collar (208), comprising a collar upper face (218) and having a U-shaped transverse profile, in which said collar (208) is adapted for being mounted on a front wall (34) of the passenger's compartment (4), in which the collar upper face (218) is situated under the flexible window (76), in which the flexible window (76) and the collar upper face (218) preferably touch in a skimming way when the driver's compartment (2) is in a non-tilting position. The U-shape is advantageous because the cantilever 208 in this way defines a smoke room, allowing to guide the flue gas in the transverse direction of the passenger transport means 1. Indeed, the passenger transport means typically has an outlet at low height, situated lower than the space-connecting device 3. As flue gas is warmer than air, the flue gas goes up, and it can accumulate around the flexible window 76 and other parts of the space-connecting device 3. If the flexible window 76 is not closing off perfectly, the flue gas can come into the passenger's compartment and the driver's compartment, which is disadvantageous because of health and/or smell issues. Because of the U-shape, the collar 208 can collect a certain volume of flue gases in said smoke room and guide it in the transverse direction, away from the space-connecting device 3. Hereby, the volume is proportional to the height of the distal collar plane, which is preferably at least 5 mm of height, preferably at least 1 cm, more preferably at least 2 cm. Furthermore, the collar offers the additional advantage that it can further support the flexible window, whether or not assisted with the presence of the liquid-guiding finger 202.

In a preferred embodiment, said space-connecting device (3) comprises a draining system that is adapted for guiding water from the roof that is part of said passenger compartment means (1), in which said draining system comprises a tank (54), in which said roof has a curvature, in which a upper portion of said roof is situated in a zone defined by the middle of said roof according to a longitudinal direction of the passenger compartment means (1), and a lower portion of said rood is situated in the zone defined by an edge of said rood, in which said curvature between said upper portion and said lower position evolves with gradual inclination, in which said draining system comprises a dam (51), in which said dam (51) comprises a raised portion and extends in a direction essentially transverse to the longitudinal direction, and in which said dam (51) is adapted for guiding water from the roof to said tank (54). This is advantageous because it prevents that liquid such as water falls onto the adapter window, and in this way reduces the amount of liquid that has to be blocked at the level of the first and second opening.

According to an embodiment, said sealing is made of an elastomer, preferably a rubber, more preferably a synthetic rubber such as silicone rubber or ethylene-propylene-diene-rubber (EPDM), whether or not blended with another synthetic material such as polypropylene.

According to a preferred embodiment, the floor comprises a bulge with an end according to the transverse direction, in which said end is adapted for receiving a water-resistant filling agent, in which the filling agent makes a water-resistant connection between said upper plane and the bulge according to the longitudinal direction. In a preferred embodiment, the water-resistant filling agent is a "kit" of which the function is not limited to establishing a water-resistant sealing, but in which this kit, on the contrary, realizes one or more of the following functions, whether or not in combination: closing off a crack, make a water-resistant closure, gluing. Hereby, the kit belongs to one or more of the following, whether or not in combination: plastic kit, plastic-elastic kit, elastic kit and/or mounting kit. Hereby, the water-resistant connection is repellent to water, but it is according to a further embodiment resistant against a wide range of liquids, including drinks and oils. According to a further embodiment, said bulge comprises a notch to ensure a good grip with the water-resistant filling agent.

The invention is defined by the appended claims. However, in the following passages reference is made to the following points:
1. A floor for mounting equipment in a passenger transport means such as a bus, a touring car or an ambulance, comprising:
   - a floor plate comprising an upper plane with a floor notch extending along a longitudinal direction of the floor in which a lower plane of the floor notch is parallel to and sunk with respect to said upper plane, and the upper plane defines the floor level,
   - an encasing profile disposed in said floor notch in the longitudinal direction comprising a floor plate that is attached to said lower plane,
   characterized in that the encasing profile comprises two or more elongated encasings for attaching the equipment for passengers provided in a parallel way onto the floor plate in the longitudinal direction of the floor.
2. A floor according to point 1, in which said encasing profile comprises a profile notch between the first and a second encasing, in which said profile notch comprises a connection plate extending between said first and said second encasing and that is essentially parallel to and sunk with respect to said upper plane, and in which said profile notch and said connection plate are adapted for receiving a floor portion, in which a floor portion upper plane extends on said floor level.
3. A floor according to point 1 or 2, in which the encasing profile is glued onto said lower plane of the floor notch.
4. A floor according to one of the above-mentioned points, in which said upper plane is covered with PVC.
5. A floor according to one of the above-mentioned points, in which an upper side of an encasing comprises a bulge extending according to said upper plane in a transverse direction essentially transverse to the longitudinal direction, in which said bulge is adapted for clamping a floor portion between said bulge and said connection plate if a connection plate is present, or between said bulge and said floor plate if no connection plate is present.
6. A floor according to point 5, in which the bulge comprises an end according to the transverse direction, that is adapted for receiving a water-resistant filling agent, in which the filling agent makes a water-resistant connection between said upper plane and said bulge according to the longitudinal direction.
7. A floor according to the above-mentioned points, in which a surface of said floor plate comprises a notch that is adapted for a contact surface-based attachment with a surface of a contiguous portion of said floor, said filling agent, or of any other portion of the passenger transport means.
8. An encasing profile for mounting equipment in a passenger transport means such as a bus, a touring car or an ambulance, adapted for being placed in a floor of said passenger transport means in a longitudinal direction, in which said encasing profile comprises a floor plate that is adapted for being attached to a lower plane of a floor notch of said floor, characterized in that the encasing profile comprises two or more elongated encasings for attaching the equipment for passengers that are provided parallel to the floor plate in the longitudinal direction of the floor.
9. A passenger transport means such as a bus, a touring car or an ambulance adapted for mounting equipment, in which said passenger transport means comprises a floor, in which said floor comprises an encasing profile, in which said encasing profile comprises a floor plate that is attached to a lower plane of a floor notch of said floor, characterized in that the encasing profile comprises two or more elongated encasings for attaching the equipment for passengers that are provided parallel to the floor plate in the longitudinal direction of the floor.
10. A passenger transport means according to the previous point 9, in which a driver's compartment of said means of transport is arranged tilting and is of the type cab-over-engine.
11. A draining system of a roof of a passenger transport means adapted for guiding the water from the roof, in which said draining system comprises a tank, in which said tank comprises a wedge-shaped outgrow and a channel, in which said wedge-shaped outgrow comprises an inlet in the vicinity of a corner of said roof, in which said wedge-shaped outgrow is adapted for collecting said water from the roof via said inlet to said channel, and in which said channel is adapted for guiding said water from the roof to a water drain.
12. A draining system of a roof according to the previous point 11, in which said roof has a curvature, in which an upper portion of said roof is situated in a zone defined by the middle of said roof in the longitudinal direction, and an upper portion of said roof situated in the zone defined by an edge of said roof, and in which said curvature between said upper portion and said lower portion evolves with a gradual inclination.
13. A draining system of a roof according to one of the previous points 11-12, in which said draining system comprises a dam, in which said dam comprises a raised portion and extends in a direction essentially transverse to the longitudinal direction of said passenger transport means, and in which said dam is adapted for guiding water from the roof to said tank.
14. A draining system of a roof according to the previous point 13, in which said dam essentially extends over a full width of said passenger transport means.
15. A draining system of a roof according to one of the previous points 11 to 14, in which said water drain comprises a branch to collect water in a rainwater tank that is present in said passenger transport means.
16. A passenger transport means such as a bus, a touring car or an ambulance with a roof adapted for guiding the water from the roof with a draining system, in which said draining system comprises a tank, in which said tank comprises a wedge-shaped outgrow and a channel, in which said wedge-shaped outgrow comprises an inlet in the vicinity of a corner of said roof, in which said wedge-shaped outgrow is adapted for collecting said water from the roof via said inlet to said channel, and in which said channel is adapted for guiding said water from the roof to a water drain.
17. A passenger transport means according to the previous point 16, in which a driver's compartment of said means of transport is arranged tilting and is of the type cab-over-engine.
18. A space-connecting device for a passenger transport means comprising a driver's compartment and a passenger's compartment, in which said space-connecting device is adapted for connecting a first opening of said driver's compartment to a second opening of said passenger's compartment, in which said driver's compartment and said passenger's compartment are attached to one and the same chassis of said passenger transport means, in which said driver's compartment is arranged tilting and is of the type of cab-over-engine, in which said space-connecting device comprises an adapter window, characterized in that said adapter window is wedge-shaped.
19. A space-connecting device for a passenger transport means according to the previous point 18, in which said adapter window comprises a flexible window.
20. A space-connecting device for a passenger transport means according to the one of the previous points 18 and 19, in which said adapter window comprises an impact absorbing element.
21. A space-connecting device for a passenger transport means comprising a driver's compartment and a passenger's compartment, in which said space-connecting device is adapted for connecting a first opening of said driver's compartment to a second opening of said passenger's compartment, in which said driver's compartment and said passenger's compartment are attached to one and the same chassis of said passenger transport means, in which said driver's compartment is arranged tilting and is of the type of cab-over-engine, in which said space-connecting device comprises a labyrinth that is adapted for protecting said connection, in which said labyrinth comprises a driver's compartment relating element and a passenger's compartment relating element,
   - in which said driver's compartment relating element is attached to a first side wall edge and/or a second side wall edge and/or a first roof edge and/or a rear wall edge of said driver's compartment and this in a direction that is essentially parallel to said respective first side wall edge and/or second side wall edge and/or first roof edge and/or first rear wall edge,
   - in which said passenger's compartment relating element is attached to a third side wall edge and/or a fourth side wall edge and/or a second roof edge and/or a front wall edge of said passenger's compartment and this in a direction that is essentially parallel to said respective third side wall edge and/or fourth side wall edge and/or second roof edge and/or second rear wall edge and/or front wall edge,
   - in which said driver's compartment relating element and said passenger's compartment relating element each comprise a bulge extending over said connection in a direction that is essentially parallel to said longitudinal direction,
   characterized in that said driver's compartment relating element and said passenger's compartment relating element do not abut in any tilting angle.
22. A space-connecting device for a passenger transport means according to the previous point 21, in which said driver's compartment relating element and said passenger's compartment relating element comprise a first flexible fingertip-shaped element, respective second flexible fingertip-shaped element at their ends, characterized in that said first and second flexible fingertip-shaped elements are adapted to abut during said tilting of said driver's compartment.
23. A space-connecting device for a passenger transport means according to point 21 and 22, in which said space-connecting device comprises an adapter window, in which said adapter window comprises a flexible window and an impact absorbing element, characterized in that said adapter window is wedge-shaped.
24. A space-connecting device for a passenger transport means according to the previous point 23, in which said adapter window comprises a flexible window.
25. A space-connecting device for a passenger transport means according to the one of the previous points 18 to 24, in which said adapter window comprises an impact absorbing element.
26. A passenger transport means comprising a driver's compartment, a passenger's compartment and a space-connecting device, in which said space-connecting device is adapted for connecting a first opening of said driver's compartment to a second opening of said passenger's compartment, in which said driver's compartment and said passenger's compartment are attached to one and the same chassis of said passenger transport means, in which said driver's compartment is arranged tilting and is of the type of cab-over-engine, in which said space-connecting device comprises an adapter window, characterized in that said adapter window is wedge-shaped.
27. A passenger transport means comprising a driver's compartment, a passenger's compartment and a space-connecting device, in which said space-connecting device is adapted for connecting a first opening of said driver's compartment to a second opening of said passenger's compartment, in which said driver's compartment and said passenger's compartment are attached to one and the same chassis of said passenger transport means, in which said driver's compartment is arranged tilting and is of the type of cab-over-engine, in which said space-connecting device comprises a labyrinth that is adapted for protecting said connection, in which said labyrinth comprises a driver's compartment relating element and a passenger's compartment relating element,
   - in which said driver's compartment relating element is attached to a first side wall edge and/or a second side wall edge and/or a first roof edge and/or a rear wall edge of said driver's compartment and this in a direction that is essentially parallel to said respective first side wall edge and/or second side wall edge and/or first roof edge and/or first rear wall edge,
   - in which said passenger's compartment relating element is attached to a third side wall edge and/or a fourth side wall edge and/or a second roof edge and/or a front wall edge of said passenger's compartment and this in a direction that is essentially parallel to said respective third side wall edge and/or fourth side wall edge and/or second roof edge and/or second rear wall edge and/or front wall edge,
   - in which said driver's compartment relating element and said passenger's compartment relating element each comprise a bulge extending over said connection in a direction that is essentially parallel to said longitudinal direction,
   characterized in that said driver's compartment relating element and said passenger's compartment relating element do not abut in any tilting angle.
28. A flexible window for a passenger transport means, said passenger transport means comprising a driver's compartment, a passenger's compartment and a space-connecting device, in which said space-connecting device is adapted for connecting a first opening of said driver's compartment to a second opening of said passenger's compartment, in which said driver's compartment and said passenger's compartment are attached to one and the same chassis of said passenger transport means, in which said passenger's compartment is arranged tilting and is of the type cab-over-engine, in which said space-connecting device comprises said flexible window, in which said flexible window is adapted to be attached in the vicinity of said first opening, in which said flexible window closes off said first opening and said second opening all around.
29. A flexible window for a passenger transport means according to the previous point 28, in which said flexible window is made of rubber.
30. A flexible window for a passenger transport means according to the previous points 28 to 29, in which said flexible window is provided with a profile relating indentation and/or a profile relating bulge adapted for attachment to a window profile.
31. A window profile for a flexible window according to the previous points 28 to 30, in which said window profile is provided with a flexible relating indentation and/or a flexible relating bulge adapted for attachment to said flexible window on said window profile.
32. A window profile according to point 31, in which said window profile is made of metal.
33. A method for the fabrication of a flexible window according to point 28, 29 or 30 comprising the following steps,
   - fabricating a basic structure with as a cross-section a cross-section of a leg of said flexible window;
   - repeatedly cutting said basic structure according to an inclined section for fabricating a window part, preferably in an angle of 45 degrees with respect to the longitudinal direction of said basic structure;
   - attaching said window parts to each other, preferably by gluing.
34. A method for the fabrication of a window profile according to point 31, comprising the following steps,
   - fabricating a profile basic structure with as a cross-section a cross-section of a leg of said window profile;
   - repeatedly cutting said profile basic structure according to an inclined section for fabricating a profile part, preferably in an angle of 45 degrees with respect to the longitudinal direction of said basic structure;
   - attaching said profile parts to each other.
35. A passenger transport means, said passenger transport means comprising a driver's compartment, a passenger's compartment and a space-connecting device, in which said space-connecting device is adapted for connecting a first opening of said driver's compartment to a second opening of said passenger's compartment, in which said driver's compartment and said passenger's compartment are attached to one and the same chassis of said passenger transport means, in which said passenger's compartment is arranged tilting and of the type cab-over-engine, in which said space-connecting device comprises a flexible window, in which said flexible window is adapted to be attached in the vicinity of said first opening, in which said flexible window closes off said first opening and said second opening all around.

The above-mentioned points 1 to 35 relate to diverse floor relating aspects of the invention, with in particular the floor according to point 1, the preferred embodiment according to point 2, the encasing profile according to point 8 and the passenger transport means according to point 9. For each of these three floor relating aspects, the invention solves the problem of an effective attachment of equipment in the floor of a passenger transport means. Because the profile has two encasings instead of one, the attachment of seats can be carried out much more efficiently. Moreover, such design contributes to the solidity of the encasing profile. This solidity is pre-eminently ensured in an embodiment with a connection plate corresponding to point 2.

The above-mentioned points 1 to 35 further relate to diverse drain relating aspects of the invention, with in particular the draining system according to point 11 and the passenger transport means according to point 16. According to each of both drain relating aspects, the invention solves the problem of a lack of efficient draining for a passenger transport means. Thanks to an adapted device on the roof of said passenger transport means, water does not get past certain limits. In the case of a passenger transport means with one single roof, the invention prevents that water from the roof gets into the first portions of the means of transport. This prevents excessive water on the windscreen, improving the visibility of the driver. In the case of a passenger transport means with a first roof for a driver's compartment and a second roof for a passenger's compartment, said invention prevents that excessive water gets to the front portion of the concerning roof. This cannot only prevent excessive water on the windscreen, but it can also be useful when protecting a space-connecting device between said driver's compartment and said passenger compartment against excessive water.

The above-mentioned points 1 to 35 also relate to diverse adapter window relating aspects of the invention, with in particular the space-connecting device according to point 18 and the passenger transport means according to point 26. According to both adapter window relating aspects of the invention, the problem is solved that occurs when one wishes to connect a tilting driver's compartment of the type cab-over-engine to a separate passenger compartment. Typical of the present invention is that it offers an easier and more reliable way to do this than the present known approaches. An important advantage of such wedge-shaped embodiment of the adapter window is the advantageous mechanical characteristics, including a better attachment, in particular when the cabin is tilted downwards or upwards. A further advantage of such a wedge-shaped arrangement is that possible impacts, shocks and vibrations can be absorbed, and this by means of an impact absorbing element. Closely related thereto are diverse labyrinth relating aspects of the invention, with in particular the space-connecting device according to point 21 and the passenger transport means according to point 27. According to both labyrinth relating aspects of the invention, the problem is solved that occurs when one wishes to protect a connection between a tilting driver's compartment of the type cab-over-engine and a separate passenger's compartment against outside influences such as rain or dust. Typical of the present invention is that it offers a unique way to do this in an easier and more elegant way than the present known approaches.

Finally, the above-mentioned points 1 to 35 also relate to diverse flexible window relating aspects of the invention, with in particular the flexible window according to point 28 and the passenger transport means according to point 35. According to both flexible window relating aspects of the present invention, the problem is solved that occurs when one wishes to connect a tilting driver's compartment of the type cab-over-engine to a separate passenger compartment. Hereby, the present invention allows to do this in an easier and more reliable way than according to the present known concepts. An important advantage of said flexible window is that it offers a very good sealing around said openings. A second advantage is that it can absorb impacts in a certain extent, especially when combined with an impact absorbing element. A third advantage is the relative ease and related durability, in particular when said flexible window is protected against rain or dust and other outside circumstances by means of a further protection that encloses said flexible window.

In the following, the invention will be described by means of non-limiting examples illustrating the invention, and not meant to be interpreted as limiting the scope of the invention.

### EXAMPLES

### EXAMPLE 1: An embodiment of a passenger transport means

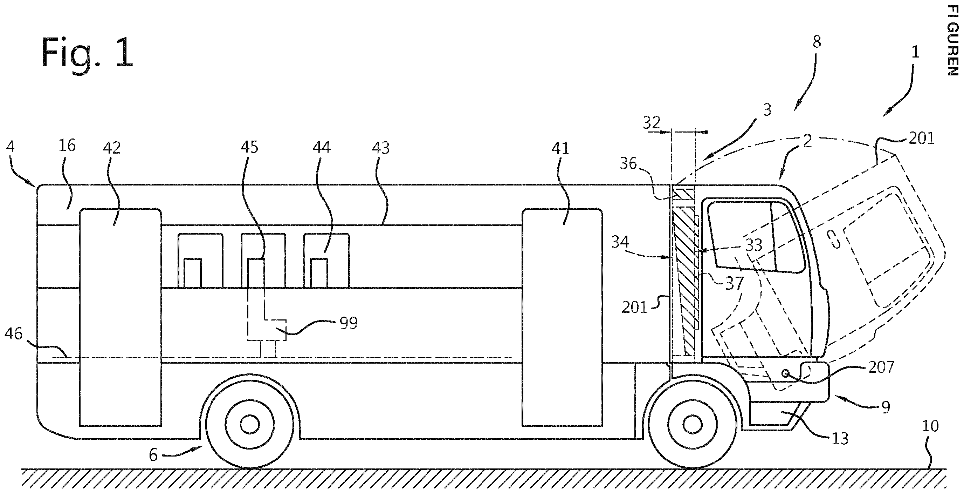

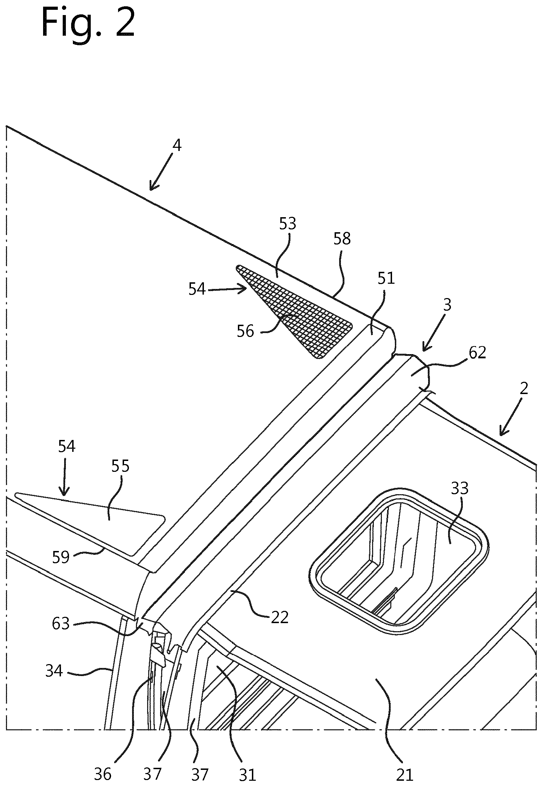

Fig. 1 and Fig. 2 illustrate a first example and show a passenger transport means, in particular a bus 1. A pair of chassis-mountable elements 8 consisting of a passenger's compartment 4 and a driver's compartment 2 is mounted onto a chassis frame of a chassis 6 through absorption elements. The passenger's compartment 4 and the driver's compartment 2 are connected to each other via a sealing device 3. The passenger's compartment 4 is in a side wall 16 provided with a first door 41 and a second door 42 and a window assembly 43 with one or more windows 44, and is internally provided with two rows of seats 45, in which each seat is mounted onto one of two encasing profiles 46 provided with encasings for receiving seats at the level of an equipment anchoring point 99 and arranged according to the longitudinal direction of the bus 1. The driver's compartment 2 is mounted in a frontally oriented end area 9 with a device provided with a centre of rotation on the chassis frame to be able to tilt around a pivot axis 207 parallel to the support surface 10 and perpendicular to the longitudinal direction of the bus 1. This design of the type "cab-over-engine" is used on trucks 1 in which a driving motor 13 and accessory devices are placed in the chassis frame, meaning under a floor of the driver's compartment 2, to provide access for maintenance and repair works of the driving motor and the accessory units.

Said bus 1 comprises a space-connecting device 3 shown in Fig. 1. This space-connecting device 3 is shown in more detail in Fig. 2. The driver's compartment 2 is connected to the passenger's compartment 4 by means of said space-connecting device 3 comprising a passage 31 and defines a distance 32 between a rear wall 33 of the driver's compartment 2 and an opposing parallel front wall 34 of the passenger's compartment 4. Hereby, said rear wall 33 of the driver's compartment 2 comprises an opening, i.e. a first opening, and said front wall 34 of the passenger's compartment also comprises an opening, i.e. a second opening. Said space-connecting device 3 comprises a labyrinth 36 and a wedge-shaped adapter window 37. Hereby, each of both outer side walls of the driver's compartment 2, one at each side, extends backwards past the wedge-past adapter window 37, as a result of which the rear wall 201 of each of said outer side walls is situated closer to the rear side of the vehicle than both the rear wall 33 of the driver's compartment 2 and the front wall 34 of the passenger's compartment 4. Analogously, the outer upper wall of the driver's compartment 2 preferably extends backwards past the wedge-shaped adapter window 37. This is advantageous because the wedge-shaped adapter window 37, the labyrinth 36 and other relevant parts of the space-connecting device 3 are enclosed in such way by these side walls and/or upper wall, offering protection against outside influences such as sunlight or rainfall.

Said adapter window 37 encloses said openings from inside and offers a circumferentially closed-off opening 31 between the driver's compartment 2 and the passenger's compartment 4 in the form of a large open window, i.e. a window opening with a glass. In an alternative embodiment, a material is still incorporated in the window opening, preferably a transparent or semi-transparent material such as plexiglass.

Said adapter window 37 is wedge-shaped. A preferred embodiment of said adapter window 37 is described in more detail in example 2 below.

Said labyrinth is the outside of said space-connecting device 3, and keeps the wedge-shaped adapter window 37 free from rain and dust through a protection all around, in which the protection however is sufficiently breathable, allowing to keep said adapter window 37 at all times in ventilated circumstances, and thus to avoid humidity problems such as condensation. Hereto, said labyrinth 36 has in a preferred embodiment a roof relating portion and two side wall relating portions, i.e. a roof relating portion in the vicinity of the roof of the bus 1 and a side wall relating portion for each side wall of the bus 1. Said labyrinth 36 is however shown only partially in Fig. 2, as only the roof relating portion is shown. Said roof relating portion of said labyrinth 36 comprises a first labyrinth element 62 and a second labyrinth element 63. On the roof upper plane 21 of the driver's compartment 2, said first labyrinth element 62 is attached in the vicinity of the roof edge 22 oriented to the rear side of the vehicle, in which said labyrinth element 62 is attached to said roof edge 22 and/or the edge of said rear wall 33 and this in a direction essentially parallel to said roof edge 22. Said first labyrinth element 62 has a fingertip-shaped cross-section according to said longitudinal direction, in which the fingertip-shaped element extends in the direction of the rear side of the vehicle. On the roof upper plane 53 of the passenger's compartment 4, said second labyrinth element 63 is attached in the vicinity of the roof edge 57 and this oriented to the front side of said bus 1, in which said labyrinth element 63 is attached to said roof edge 57 and/or the edge of said front wall 34 and this in a direction essentially parallel to said roof edge 57. Said second labyrinth element 63 also has a fingertip-shaped cross-section according to said longitudinal direction, in which the fingertip-shaped element does however extend in the direction of the front side of said bus 1. Both labyrinth elements are designed in such way that they never abut, regardless of the precise tilting angle in which the driver's compartment is tilted. In a preferred embodiment as illustrated in Fig. 2, the end of said second labyrinth element 63 is located at a lower height with respect to the bus 1 than the end of said first labyrinth element, so that the first labyrinth element 62 encloses the second labyrinth element 63 in the space when the cabin is not tilted.

The roof upper plane 53 of the passenger's compartment 4 shows an inclination, curvature or radius in which the highest portion of the roof is situated in the zone defined by the middle of the roof according to the longitudinal direction, and the lowest portion of the roof is situated in the zone defined by the rood edges 58 and 59, and in which the inclination between the highest and the lowest portion evolves with a gradual inclination.

Said roof upper plane 53 is further provided with a standing dam 51 attached to said roof 53 in the vicinity of the roof edge 57 oriented to the front side of the vehicle, in which said dam 51 is attached to said roof edge 57 and this in a direction essentially parallel to this rood edge 57, i.e. the width direction of said bus 1. Hereby, said dam extends over the full width of the bus 1, i.e. the dam extends from a rood edge 59 to a roof edge 58. The dam 51 essentially has a U-shaped cross-section in said longitudinal direction in which the ends of both tails of said cross-sections are oriented towards the rear side of the vehicle.

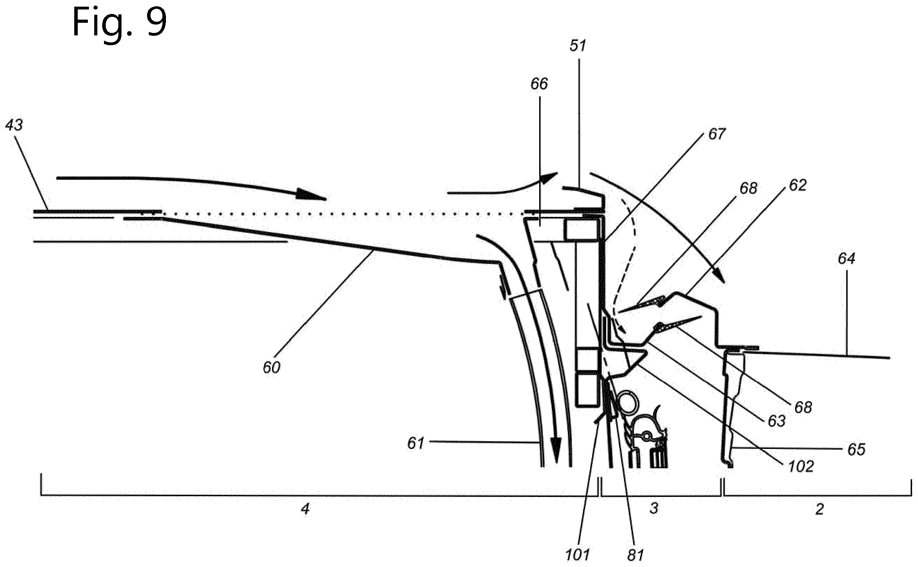

Additionally, the roof is provided with a first and second water tank 54 in the vicinity of the roof edge 57 oriented towards the front side of the vehicle, with the first water tank 54 in the vicinity of the roof edge 58 and the second water tank 54 in the vicinity of the roof edge 59. In a preferred embodiment, the water tank 54 has in a plan view an essentially triangular shape corresponding an inlet of the water tank 54, in which two sides of the triangle extend essentially parallel to either the roof edge 57 and the roof edge 59, respectively, in case of the first water tank, or the roof edge 57 and the roof edge 58, respectively, in case of the second tank. Hereby, and angle of the triangle is situated in the vicinity of one of both corners of the roof in the vicinity of the front wall 34 of the passenger's compartment 4. The water tank comprises a grid 56 to block leaves and other solid material from outside, as well as optionally a cover cap 55 mounted in an inclined way with respect to the grid as a result of which a crack-shaped opening between the grid 56 and the cover cap 55 exists guiding rainwater into the grid 56. Under the grid 56, further portions of the water tank 54 are situated shown in Fig. 9, comprising a wedge-shaped outgrow 60, in the embodiment in Fig. 9 a funnel, gradually passing into a channel 61, in the embodiment in Fig. 9 a draining pipe. The water tank 54 guides the water running through grid 56 to a water drain that is situated lower (not shown), in which said water drain defines a notch in the outer surface of the passenger's compartment 4 allowing to guide the water to the outside. According to an alternative embodiment, the water drain comprises a branch allowing to collect water in a rainwater tank (not shown) that is present in the bus 1. According to a side view as shown in Fig. 9, said water tank 54 comprises a wedge-shaped outgrow extending upward, corresponding said funnel, that passes with a gradually decreasing curvature in a cylindrical structure in a downward direction, corresponding said drain pipe. Said funnel comprises a funnel edge attached all around according to a watertight connection to the edge of said inlet of said water tank 54, in which said edge of the inlet is situated in the immediate vicinity of the edge of the grid 56. Said drain pipe comprises a drain pipe edge that is attached all around according to a watertight connection to the edge of said inlet. For passengers that are present in the passenger's compartment 4, both water tanks 54 are not visible as they are adapted to be coated and/or built-in in the decoration of the bus 1.

Other details of the bus 1, such as the equipment in the passenger's compartment and the driver's compartment as well as the steering wheel, all buttons, pedals and handles that are present in the driver's compartment to be able to drive the bus 1 will not be discusses separately as they are adapted to meet the required purpose of the bus 1 and are generally known to the worker and/or expert in the domain.

### EXAMPLE 2: Embodiment of an adapter window comprising a flexible window

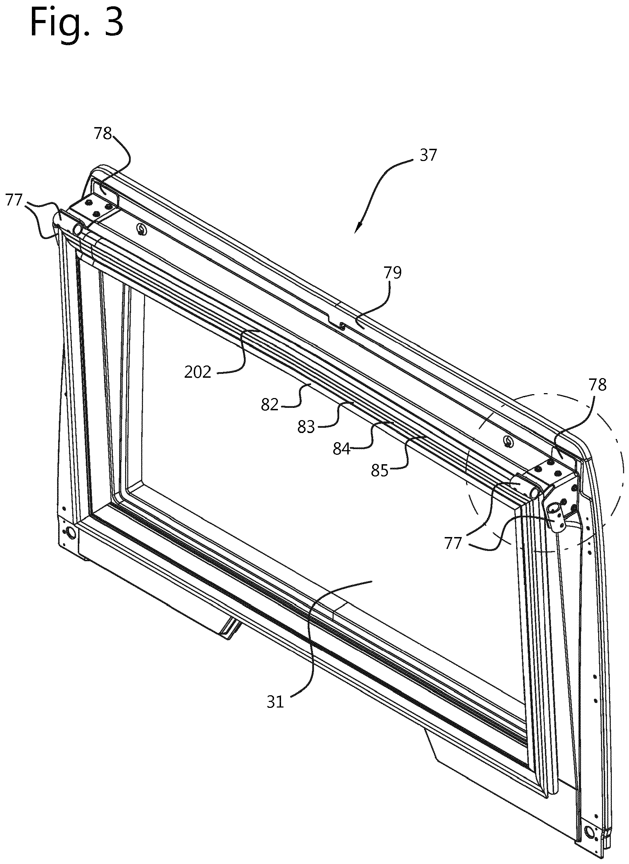

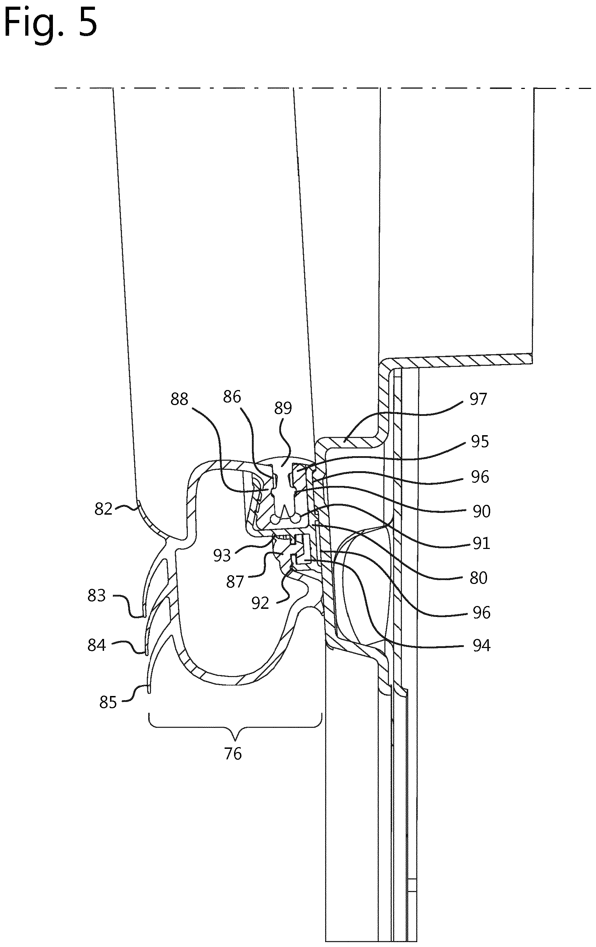

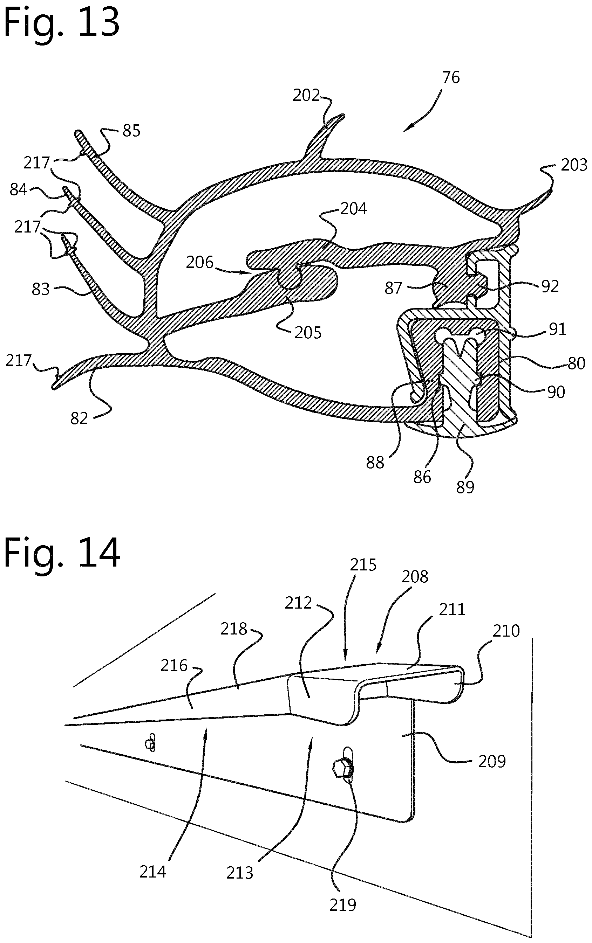

Fig. 3 to 8, 13 and 14 show a second example and illustrate an exemplary embodiment of a wedge-shaped adapter window 37 according to the present invention, as part of said space-connecting device 3. Hereby, Fig. 3-7 and 13 shown an example of a preferred embodiment with a flexible window 76 as illustrated in Fig. 13, which comprises amongst other things a liquid guiding finger 202 and two inner fingers 204, 205. This should be distinguished from an alternative realization of the flexible window 76 of which an example is shown in Fig. 5, that differs amongst other things from the realization shown in Fig. 13, because it does not comprise a liquid guiding finger 202 and no inner fingers 204, 205. Fig. 7 and 14 are generally applicable for both the embodiment in Fig. 5 and the alternative embodiment in Fig. 13.

Said adapter window 37 is wedge-shaped, and can for example be used in an embodiment as described in the first example. Said adapter window comprises an outer frame 79 that is adapted to be attached to the inner edge of the rear wall 33 of the driver's compartment 2. Said adapter window comprises a flexible window 76 that is attached as a frame around said passage 31 by means of a window profile 80. Hereby, said window profile 80 is adapted to receive said flexible window 76, and vice versa. Said flexible window 76 is preferably made of rubber, more preferably of EPDM. Said window profile 80 is preferably made of metal, more preferably of alumina.

As to the shape, a vertical cross-section in the longitudinal direction of said adapter window 37 is wedge-shaped, as is shown in detail in Fig. 7. Hereby, Fig. 7 shows a vertical cross-section of said space-connecting device 3 in the longitudinal direction of the bus halfway the width of the bus. Said wedge comprises a first end 71 and a second end 72, as well as a first standing side 73 and a second standing side 74. Hereby, said first end 71 is smaller than said second end 72 and said first end 71 is situated at the lower side in the vicinity of the chassis 6. Hereby, said second end 72 is larger than said first end and said second end 72 is situated at the upper side in the vicinity of the roof. Furthermore, said first standing side 73 is oriented essentially vertical, i.e. according to a vertical that is perpendicular to the plane defined by the chassis 6, and said second standing side 74 is oriented oblique, in which said second standing side 74 is in an angle α (alpha) with said vertical. In a preferred embodiment, this angle α has a value between 1 degree and 35 degrees, more preferably between 2 degrees and 20 degrees, still more preferably between 3 and 5 degrees. An important advantage of such wedge-shaped embodiment of the adapter window 37 is the advantageous mechanical characteristics, including a better attachment, in particular when the cabin is tilted downwards or upwards. Hereby, the front wall 34 of a passenger's compartment 4 is attached via a flexible-relating bulge 75, in which said flexible-relating bulge is adapted to make a flexible connection with a portion of said flexible window 76, preferably with the complete circumference of said flexible window 76.

Fig. 7 shows a view that illustrates the advantages of the wedge-shaped character of the adapter window 37 very well. The advantageous mechanic characteristics include a better adaptability to the position of the pivot axis 207, which is not amongst other things located laterally with respect to the space-connecting device 3. Because of this lateral position, one has to take into account the turning radius of the driver's compartment 2, and the adapter window 37 must not be positioned transversely to the longitudinal direction, but in an acute angle α, as a result of which the adapter window 37 is wedge-shaped. This allows to transfer the forces that are applied when tilting downwards in a more equal way to portions of the passenger's compartment, illustrated in Fig. 7 with different arrows. Also, when the passenger transport means is in a non-tilted status, the wedge-shaped character is advantageous, as the suspension of the driver's compartment also generates vibrations in the direction tangential to the turning radius. Because of the wedge-shaped character, these vibrations can also be better transferred to portions of the passenger's compartment, with also a better connection of the adapter window 37 at portions that are permanently connected to the passenger's compartment 4, such as the flexible relating bulge 75.

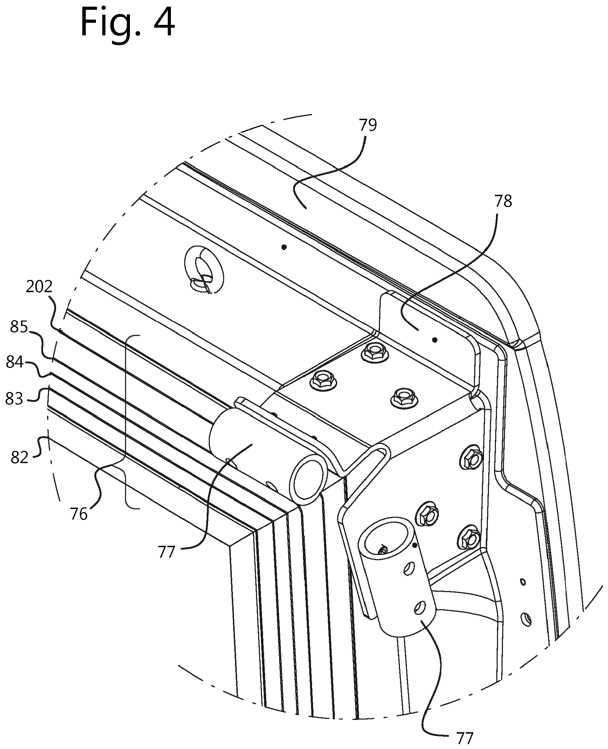

A further advantage of such a wedge-shaped arrangement is that possible impacts, shocks and vibrations can be absorbed, and this by means of an impact absorbing element 77. These impact absorbing elements are shown in Fig. 3, and more in detail in Fig. 4 as mounted onto the adapter window 37, in which the adapter window 37 is however not mounted in said bus 1.

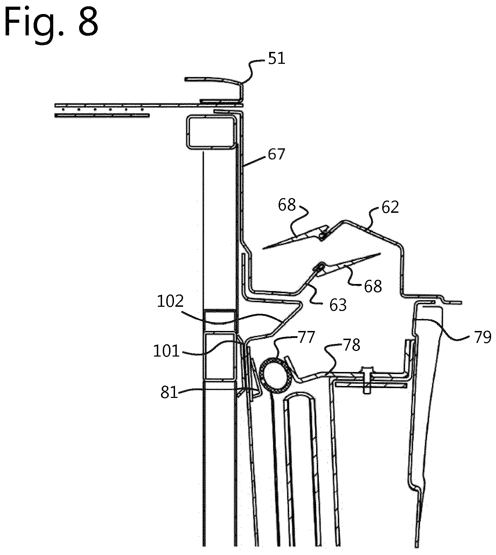

Complementary thereto, Fig. 8 shows these impact absorbing elements as mounted as part of said space-connecting device 3. Hereby, Fig. 8 is a vertical cross-section in the longitudinal direction of the bus 1 in the vicinity of a side wall of a bus, in which it doesn't matter whether it relates to the left of right side wall, as it provides the same cross-section. In a preferred embodiment, said adapter window 37 comprises several impact absorbing elements 77, more preferably four impact absorbing elements 77, in which said impact absorbing element is adapted to be attached to an impact profile 78. In a preferred embodiment as illustrated in Fig. 3, said impact profile 78 comprises two bulges that are adapted to attach impact absorbing elements 77 to, with one bulge for each impact absorbing element 77. The wedge-shaped design of said adapter window 37 is hereby advantageous because, considering the type of suspension of said driver's compartment 2 adapted for a tilting cabin, it ensures that possible impacts from the driver's compartment 2 are transferred as much as possible to a direction perpendicular to the plane of an inclined impact-receiving element 81 belonging to the passenger's compartment 4, in which said impacts are transferred via said impact absorbing elements 77. Said direction that is perpendicular to the plane has the advantage that an optimal force distribution can be offered when absorbing said shocks. As is shown in detail in Fig. 8, said flexible relating bulge 75 comprises an impact armature 101 and a passenger's compartment relating reinforcing element 102. Hereby, the impact armature 101 has an adapted position at the impact-receiving element 81 and an adapted U-shape with the open side of the U-shape oriented towards the passenger's compartment, for offering a maximum resistance against impacts that are transferred via said impact absorbing elements 77. Said passenger's compartment relating reinforcing element 102 is hereby attached between said impact armature and said impact-receiving element 81, and in this way provides for additional strength.

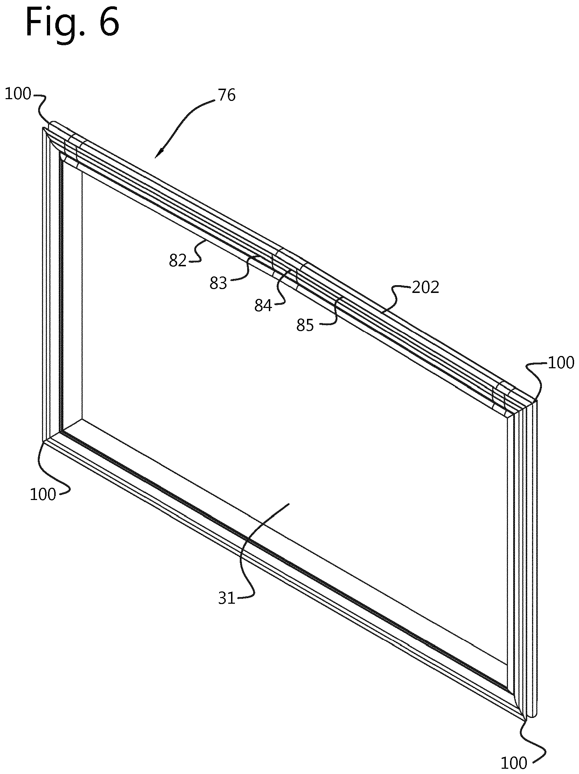

Said flexible window 76, shown in Fig. 6 in a non-attached state, is, as discussed above, adapted to be attached to said adapter window 37 via said window profile 80, at a first side of said flexible window 76, looking into the direction of the driver's compartment 2. At a second side of said flexible window, looking into the direction of said passenger's compartment 4, said flexible window 76 comprises a range of bulges. Fig. 5 shows said flexible window 76 in a vertical cross-section in a longitudinal direction of said bus 1 halfway the width of said bus 1. More in particular, Fig. 5 shows a lower portion of said flexible window 76, in the vicinity of the chassis 6 of said bus 1. In such a cross-section, said window comprises a finger, in a preferred embodiment a plurality of fingers, in a further preferred embodiment two finger groups. Hereby, the first finger group comprises a first flexible finger 82, and the second finger group comprises a second flexible finger 83, a third flexible finger 84 and a fourth flexible finger 85. Hereby, said first finger group keeps the flexible connection realized by said flexible window 76 free from dust and water. Additionally, the first finger group provides for a force balance with respect to forces that are exercised by the second finger group. Complementary to the first finger group, said second finger group ensures the flexible anchoring of said flexible window 76, and by extension, the flexible anchoring of said adapter window 37 connected to said flexible window 76, with respect to said flexible relating bulge 75. Additionally, the second finger group provides for a force balance with respect to forces that are exercised by the first finger group. As shown in Fig. 5, said flexible window 76 further comprises a profile relating bulge 86 as well as a profile relating bulge 87, extending with the same cross-section as described above in the width direction of the bus 1.

In a preferred embodiment as shown in Fig. 13, said flexible window 76 further comprises a liquid guiding flexible finger 202 and a driver's compartment relating flexible finger 203. Said flexible window 76 in such embodiment also comprises a first 204 and a second 205 flexible inner finger that are connected mutually by means of an enclosing connection 206. Hereby, the first flexible inner finger 202 comprises at its end an elongated bulge extending over the length of a leg of the flexible window 76. The second flexible inner finger 205 comprises at its end an elongated indentation or groove extending over the length of a leg of the flexible window 76. Said indentation and bulge hereby have an adapted shape to make an enclosing connection 206, that in itself can be attaching, but preferably is further fastened with glue. Such inner fingers 204, 205 are advantageous because they are reinforcing, in which they reinforce the flexible window 76 in such way that they are self-supporting, and do not sag under their own weight and/or external forces. Moreover, the inner fingers 204, 205 are advantageously made of the same mass flexible material at the production, ensuring a solid connection. Hereby, for a simpler production, only cross-section with open ends (contrary to cross-sections with loops) have been used, and these ends are advantageously assembled within the flexible window 76, at the level of the connection 206. By situating the connection 206 inside, this connection, preferably a glued connection, is protected optimally against external influences such as liquids (e.g. rain), wind, sun, cold and warm gases such as flue gases. The advantage of the liquid guiding flexible finger 202 is more easily to understand by means of Fig. 7. The liquid-guiding finger 202 indeed guides the rainwater that still gets to upper portions 72 of the flexible window 76 despite the double barrier offered by the labyrinth. A large part of the water that in this way reaches the flexible window 76 is thus guided in the transverse direction, in which the liquid-guiding finger 202 forms an upstanding wall of a "gutter". A second advantage of the liquid-guiding finger 202 is that it can facilitate the contact with the collar 208, offering a supporting effect to the flexible window 76, with a reduced risk of sagging.

Said flexible window comprises a multitude of notches 217 ensuring a better grip at contact with the surface of the front wall of the passenger's compartment 4, and a further improvement of a fluid barrier.

Said profile relating bulge 86 hereby fulfils a double function. A first function relates to the attachment of an inner portion of said flexible window 76 to said window profile 80, at the flexible relating bulge 95. Hereby, the inner portion of said flexible window 76 relates to the portion looking onto the other inner portions of said flexible window 76. According a preferred embodiment as shown in Fig. 5, said profile relating indentation 86 comprises three bulging cams 88 at the outer surface for an improved attachment, in which said cams 88 extend with the same bulging cross-section in the width direction of the bus 1. A second function relates to the tightening of said flexible window 76 by means of a sealing profile 89, in a preferred embodiment made of synthetic material, more preferably made of rubber. Said sealing profile is arranged for anchoring said flexible window 76 with respect to said window profile 80. Said sealing profile 90 comprises four grip bulges 90 extending with the same cross-section in the width direction of the bus 1. These four grip bulges 90 are adapted for being received by four grip indentations 91 that are present on the inner surface of said profile relating indentation 86, and ensure a good grip at said anchoring.

The function of said profile relating bulge 87 relates to the attachment of an outer portion of said flexible window 76 with said window profile 80. Hereby, the outer portion of said flexible window 76 relates to the portion looking away from the other portions of said flexible window 76. According a preferred embodiment as shown in Fig. 5, said profile relating bulge 87 comprises a T-shaped bulge 92, extending with the same cross-section as described above in the width direction of said bus 1. Said T-shaped bulge 92 is adapted for realizing an anchoring with a flexible relating encasing 94, also T-shaped, in which said window profile 80 comprises said flexible relating encasing 94, and in which said flexible relating encasing 94 extends with the same cross-section as described above in the width direction of said bus 1. Said profile relating bulge 87 comprises a further bulging cam 93 allowing to realize an even better anchoring, in which said cam 93 extends with the same bulging cross-section in the width direction of the bus 1. For a complete description, we note that said profile relating bulge 87 is not connected to said profile relating indentation 86, in which both are separated by an intermediate portion of said window profile 80.

Together, said profile relating indentation 86 and said profile-relating bulge 87 realize the anchoring of said flexible window 76. As said inner portion and said outer portion of said flexible window are connected to each other at said fingers, the anchoring of a portion of said flexible window implies the anchoring of other portions, and the profile relating indentation 86 and the profile relating bulge 87 support each other in their function.

Furthermore, one has to note that said flexible window 76 in Fig. 5, Fig. 7 and Fig. 9 is shown in its compressed state, which state is characterized by compression. Such state is e.g. when the bus 1 is ready to drive, with non-tilting driver's compartment 2. Fig. 3, Fig. 4 and Fig. 6 correspond to a non-compressed state of said flexible window 76, which state is characterized in by the absence of compression. The latter state is e.g. taken when the driver's compartment 2 of said bus 1 is in tilting position, e.g. when the bus must be repaired and the motor must be accessible for manual intervention. The difference between the compressed state and the non-compressed state relates to a deformation of said flexible window 76, in which the horizontal dimension according to a vertical cross-section in a longitudinal direction of the bus decreases as the compression increases, and this horizontal dimension is maximal in absence of compression, when the window is in non-compressed state.

Said flexible window 76 is thus provided with different characteristics ensuring a good attachment of said framework 80. Said framework is thereto adapted for receiving different portions of said framework 80. In particular, said framework 80 thereto comprises said flexible relating indentation 95 and said flexible relating encasing 94 of which the characteristics have been discussed above. According a preferred embodiment shown in Fig. 5, said flexible relating indentation 95 and said flexible relating encasing 94 are mutually connected and thereby share portions, contributing to the technical characteristics of said framework 80, e.g. as a result of decreased weight. Said window profile 80 is attached to a bulging portion 97 of said adapter window 37 by means of a thereto appropriate technique, e.g. gluing. For a better attachment, said window profile 80 comprises one or more recesses 96 that are adapted for receiving glue portions and/or ensuring a better grip when receiving a bulge of said adapter window 37 adapted thereto.

Where Fig. 5 only shows a cross-section of said flexible window 76, the assembly relates to a framework of four separate window legs. These window legs can be fabricated by starting from a single structure extending according to a cross-section as shown in Fig. 5. This single structure should subsequently be cut in an oblique way according to cuts that preferably make an angle of 45 degrees with respect to the longitudinal direction of said single structure. The four window legs thus obtained can subsequently be attached to each other by means of a technique such as gluing. In a preferred embodiment, the resulting flexible window 76, such as e.g. shown in Fig. 6, has corner points 100 in mitre joint.

The same goes for Fig. 5 that only shows a cross-section of said framework 80, while the assembly relates to a v of four separate framework legs. These framework legs can analogously be fabricated by starting from a single structure extending according to a cross-section as shown in Fig. 5. This single structure should subsequently be cut in an oblique way according to cuts that preferably make an angle of 45 degrees with respect to the longitudinal direction of said single structure. According to a preferred embodiment, the four framework legs thus obtained are subsequently attached to each other by means of a technique such as gluing and/or anchoring with other portions of said adapter window 37, and thus a framework 80 with corner points in mitre joint are obtained. According to an alternative embodiment, the four said framework legs are brought in close vicinity of each other, but they are not attached to each other, but they are however attached to said adapter window 37 corresponding the shape of said flexible window 37, in which a mutual distance between said framework legs remains, and said framework legs are thus a little shorter in length than the corresponding said window legs.

Fig. 14 shows a collar 208, which comprises collar bar 215 and a collar support 209 that are mutually connected and are preferably made of one single plate of metal, preferably alumina or steel. The collar support 209 is appropriate for being mounted on the front wall 34 of the passenger's compartment 4, in which the collar bar 215 with a collar upper plane 218 is positioned till just under the flexible window 76, preferably at less than 10 cm under the flexible window, more preferably at less than 2 cm under the flexible window, most preferably so that the flexible window and the collar upper plane 218 touch in a skimming way when the driver's compartment 2 is in a non-tilting position. This is advantageous because it has a supporting function with respect to the flexible window. Thus, the cantilever 208 helps to prevent that the flexible window 76 sags under its own weight and/or under external forces. The collar 208 has a U-shaped transverse profile in which the open end is oriented downwards. The collar 208 preferably has a medial collar part 214 which is essentially straight and a collar end part 213 which is in an angle with respect to the medial collar part 214 so that the end is inclined downward. This is advantageous because damage to the flexible window 76 through a possible sharp corner of the collar 208 can be avoided in this way. The U-shape extends over the medial collar part 214 by means of a collar support 209, a distal collar plane 216 and a collar upper plane 218. Furthermore, the U-shape also extends over the collar end part 213 by means of the first, second and third collar end plane 210, 211, 212, respectively. Recesses 219 in the collar support 209 allow for an easy mounting with screws and/or bolts.

The U-shape is advantageous because the collar 208 in this way defines a smoke room, allowing to guide the flue gas in the transverse direction of the passenger transport means 1. Indeed, the passenger transport means typically has an outlet at low height, situated lower than the space-connecting device 3. As flue gas is warmer than air, the flue gas goes up, and it can accumulate around the flexible window 76 and other parts of the space-connecting device 3. If the flexible window 76 is not closing off perfectly, the flue gas can come into the passenger's compartment and the driver's compartment, which is disadvantageous because of health and/or smell issues. Because of the U-shape, the collar 208 can collect a certain volume of flue gases in said smoke room and guide it in the transverse direction, away from the space-connecting device 3. Hereby, the volume is proportional to the height of the distal collar plane, which is preferably at least 5 mm of height, preferably at least 1 cm, more preferably at least 2 cm. Moreover, the presence of the collar 208 offers said advantage, complementary to the advantage of guiding flue gases, of supporting the flexible window 76.

### EXAMPLE 3: An embodiment of a combination of a draining system and a labyrinth

Fig. 7, Fig. 8 and Fig. 9 show an embodiment of a combination of a draining system and a labyrinth, together ensuring the draining of water from the roof of a bus. The bus comprises a driver's compartment that is tilting according to a variable tilting angle and is of the type cab-over-engine. It relates to a side view according to a vertical section in a longitudinal direction of said bus 1 halfway the width direction of said bus 1. Specifically, a device according to Fig. 9 is adapted for keeping away the rainwater that falls onto the roof upper plane 53 of the passenger's compartment 8 as much as possible from the sealing device 3, by collecting it with a water draining system comprising a draining system and a labyrinth. Said draining system hereby comprises a tank 54 and a dam 51. Said water tank comprises a water collecting wedge-shaped outgrow 60 and a water guiding channel 61, mutually circumferentially connected to a watertight connection. Hereby, said channel 61 is connected to a drain (not shown) that either collects the water for recuperation or guides it out of said bus. Said dam 51 has a shape and function that is similar to the dam of example 1.

Said labyrinth comprises a driver's compartment relating element 62 and a passenger's compartment relating element 63. Said driver's compartment relating element 62 is attached to a first side wall edge (not shown) and/or a second side wall edge (not shown) and/or a first roof edge 64 and/or a rear wall edge 65 of said driver's compartment and this in a direction that is essentially parallel to said respective first side wall edge and/or second side wall edge and/or first roof edge 64 and/or rear wall edge 65. Said passenger's compartment relating element 63 is attached to a third side wall edge and/or a fourth side wall edge and/or a second roof edge 66 and/or a front wall edge 67 of said passenger's compartment and this in a direction that is essentially parallel to said respective third side wall edge and/or fourth side wall edge and/or second roof edge 66 and/or second front wall edge 67. Hereby said driver's compartment relating element 62 and said passenger's compartment relating element 63 each comprise a bulge extending over said connection in a direction that is essentially parallel to said longitudinal direction, According to a section in a longitudinal direction of said bus, both the passenger's compartment relating element 63 and the driver's compartment relating element 62 each have the form of a finger. Hereby, said driver's compartment relating element and said passenger's compartment relating element are preferably composed of a durable material, preferably metal or a synthetic material. In a preferred embodiment, said driver's compartment relating element 62 and said passenger's compartment relating element 63, that are both finger-shaped, are at their ends connected to a fingertip-shaped element 68, as first member, ensuring an maximum closure of the labyrinth to which they belong, preferably composed of a flexible material, more preferably rubber, more preferably with a flexible transmission attached to said passenger's compartment relating element 63 and said driver's compartment relating element 62. Hereby, said passenger's compartment relating element 63 and said driver's compartment relating element 62 ensure the attachment of said fingertip-shaped element 59 at respective parts of the driver's compartment or the passenger's compartment. Hereby, said fingertip-shaped element extends in the width direction of the bus 1 according to the same section as shown in Fig. 7, Fig. 8 and Fig. 9. Important hereby is that said driver's compartment is tilting according to a variable tilting angle and is of the type cab-over-engine and that said driver's compartment relating element 62 and said passenger's compartment relating element 63 do not abut in any tilting angle. This is complementary to the relation between both said fingertip-shaped elements 68, that are adapted to possibly abut during tilting, and in a preferred embodiment abut at each tilting. More in particular, both fingertip-shaped elements 68 are adapted to not abut when the bus is ready to drive, i.e. is in a non-tilting position, but they are adapted to abut during tilting of the driver's compartment 2 for opening or closing.

As a further protection against water, said flexible relating bulge 75 also comprises an splashing relating bulge 98. Said splashing relating bulge 98 is a bulge extending in the direction of said driver's compartment 2 and situated under the zone where the flexible window 76 is in contact with said flexible relating bulge 75. Said splashing relating bulge 98 helps to protect the adapter window 37 and in particular the flexible window 76 against water that can splash, in particular when the bus is in operation and is driving in puddles.

As is shown in detail in Fig. 8, said flexible relating bulge 75 comprises a passenger's compartment-relating reinforcing element 102. Said passenger's compartment relating reinforcing element 102 is under said passenger's compartment relating element 63, and in this way provides for additional strength. More in particular, said passenger's compartment relating reinforcing element 102 guarantees that the elastic bending of said passenger's compartment relating element 63 remains within the limits of allowable bending, and does not get deformed permanently under the influence of the possible forces that said fingers 68 exercise onto each other when tilting the driver's compartment 2 for opening or closing.

### EXAMPLE 4: An embodiment of an encasing profile

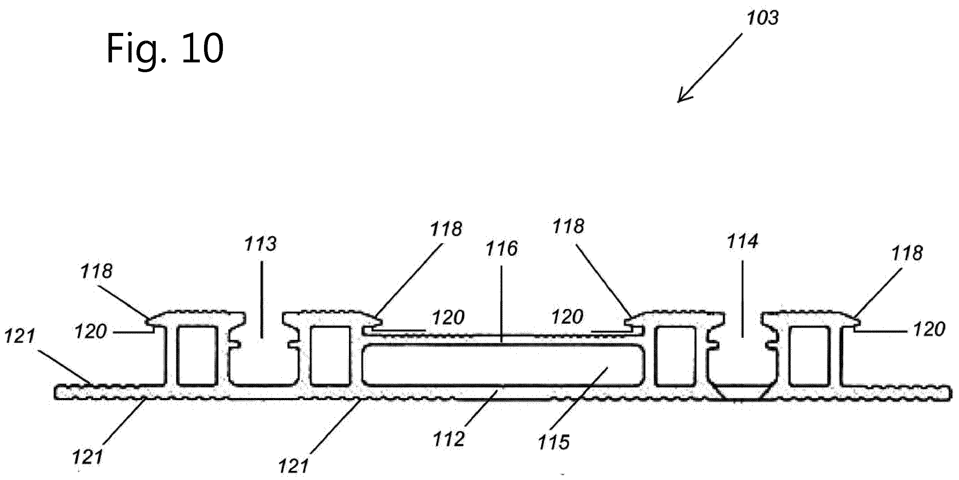

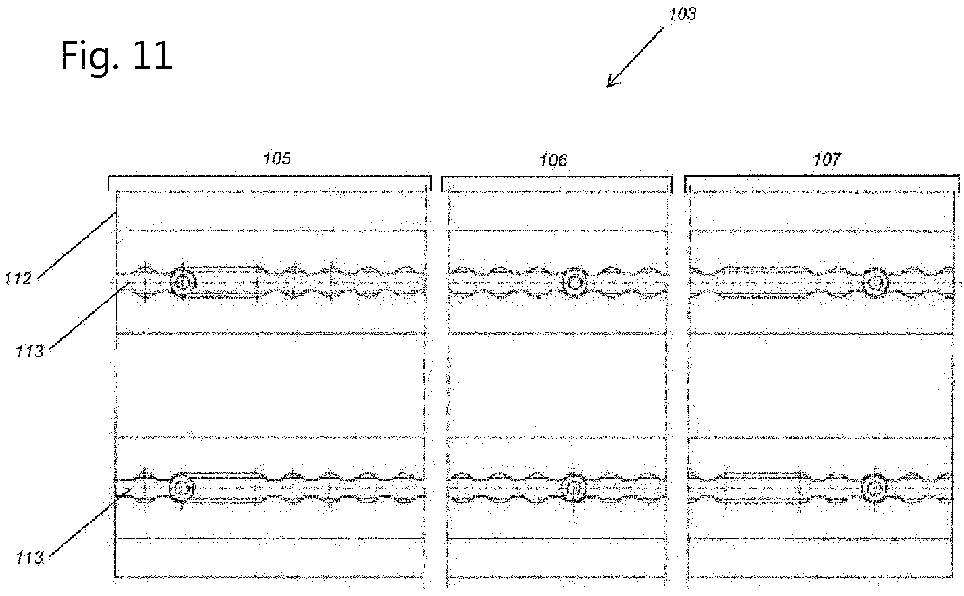

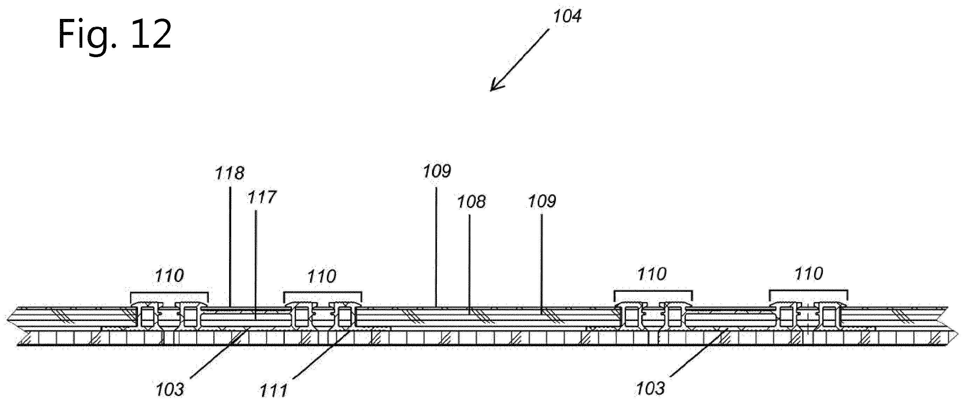

Fig. 10 and Fig. 11 shown an embodiment of an encasing profile 103 for mounting equipment in said passenger's compartment 4 of said bus 1 corresponding the present invention. Fig. 12 shows an embodiment of a floor 104 for said passenger's compartment 4 of said bus 1 comprising two of said encasing profiles 103 corresponding the present invention.

More in particular, Fig. 10 shows a vertical cross-section of said encasing profile 103, in which said cross-section is taken in a width direction of said passenger's compartment 4 of said bus 1. Fig. 11 shows a plan view of said encasing profile 104, in which a first profile portion 105, a second profile portion 106 and a third profile portion 107 are shown, that are generally connected to each other into a massive profile. Fig. 12 shows a vertical cross-section of a floor 104 comprising said encasing profile 103, in which said vertical cross-section is taken in a width direction of said passenger's compartment 4 of said bus 1.

Said floor 104 is adapted for mounting equipment in a passenger transport means such as touring car or an ambulance, in this case the bus 1. Said floor 104 comprises a floor plate 108.

Said floor plate 108 comprising an upper plane 109 with a floor notch 110 extending along a longitudinal direction of the floor 104 in which a lower plane 111 of the floor notch 110 is parallel to and sunk with respect to said upper plane 109, and the upper plane 109 defines the floor level,

Additionally, said floor comprises an encasing profile 104 disposed in said floor notch 110 in the longitudinal direction comprising a floor plate 112 that is attached to said lower plane 111. Important hereby is that the encasing profile 104 comprises two or more elongated encasings 113 and 114 for attaching the equipment for passengers provided in a parallel way on the floor plate 112 in the longitudinal direction of the floor 104.

Furthermore, said encasing profile 103 comprises a profile recess 115 between a first encasing 113 and a second encasing 114, in which said profile recess 115 comprises a connection plate 116 extending between said first encasing 113 and said second encasing 114 and extending essentially parallel to and sunk with respect to said upper plane 109. Hereby, said profile recess 115 and said connection plate 116 are adapted for receiving a floor portion 117, in which a floor portion upper plane 118 extends on said floor level. Because of the presence of said connection plate 116, the profile recess 115 has the shape of a room.

For fabricating floor 102, said encasing profile 103 is anchored in a permanent way to said lower plane 111 of the floor recess 110, preferably by gluing.

Said upper plane 109 of said floor 104 is covered with an adapted flooring material, preferably PVC.

Hereby, the upper side of said encasing 113 and 114 comprises a bulge 118 extending according to said upper plane 109 in a transverse direction essentially transverse to the longitudinal direction, in which said bulge 118 is adapted for clamping a floor portion 117 between said bulge and said connection plate at the side oriented towards the connection plate 116, or clamping a floor portion 119 between said bulge 117 and said floor plate 112 at the side oriented in an opposite direction of the connection plate 116.

Hereby, said bulge 117 comprises an end 120 according to the transverse direction, that is adapted for receiving a water-resistant filling agent, in which the filling agent makes a water-resistant connection between said upper plane 109 and said bulge 117 according to the longitudinal direction.

Finally, a portion of the surface of said floor plate 112 comprises a notch 121 that is adapted for a contact surface-based attachment with a surface of a contiguous portion of said floor 104, said filling agent, or of any other portion of the bus 1.

## Claims

1. A space-connecting device (3) for a passenger transport means (1) comprising a driver's compartment (2) and a passenger's compartment (4), in which said space-connecting device (3) is adapted for connecting a first opening of said driver's compartment (2) to a second opening of said passenger's compartment (4), in which said driver's compartment (2) and said passenger's compartment (4) are attached to one and the same chassis (6) of said passenger transport means (1), in which said driver's compartment (2) is arranged tilting and is of the type of cab-over-engine, in which said space-connecting device (1) comprises an adapter window (37), in which said adapter window (37) comprises a flexible window (76) that is adapted for being attached in the vicinity of said first opening, in which said flexible window (76) circumferentially closes off said first opening and said second opening, **characterized in that** said adapter window (37) is wedge-shaped, preferably in an angle α between 1 degree and 35 degrees, more preferably between 2 degrees and 20 degrees; and **in that** said flexible window (76) comprises a flexible finger (82, 83, 84, 85) for keeping a connection realized by said flexible window (76) free from dust and water.

2. Space-connecting device (3) of claim 1, **characterized in that** said flexible window (76) is made of a flexible material, preferably rubber, that said flexible window (76) is provided with a profile relating indentation (86) and/or a profile relating bulge (87) adapted for attachment to a window profile (80), in which said window profile (80) is preferably made of metal..

3. Space-connecting device (3) of claims 1 or 2, in which said flexible window (76) is made of a flexible material, preferably rubber, **characterized in that** said flexible window is self-supporting, preferably in which said adapter window (3) comprises a reinforcing inner finger (204, 205) that is made of the same said flexible material, preferably in which said inner finger (204, 205) is made as an integral part of the flexible window (76).

4. Space-connecting device (3) of claims 1-3, **characterized in that** said flexible window (76) comprises a liquid-guiding finger (202) that is free-standing with respect to said driver's compartment (2) and said passenger's compartment (4) and is adapted for guiding liquid according to a direction transverse to said passenger transport means (1).

5. Space-connecting device (3) of claim 1-4, **characterized in that** said adapter window (37) comprises an impact absorbing element (77), with more preferably four impact absorbing elements (77).

6. Space-connecting device (3) of claim 1-5, in which said space-connecting device comprises a labyrinth (36) adapted for protecting said connection of the first opening with the second opening, **characterized in that** said labyrinth (36) comprises a driver's compartment relating element (62) and a passenger's compartment relating element (63),
- in which said driver's compartment relating element (62) is attached to a first side wall edge and/or a second side wall edge and/or a first roof edge and/or a rear wall edge of said driver's compartment (2) and comprises a bulge extending at least partially over said connection;
- in which said passenger's compartment relating element (63) is attached to a third side wall edge and/or a fourth side wall edge and/or a second roof edge and/or a front wall edge of said passenger's compartment (4) and comprises a bulge extending at least partially over said connection.

7. Space-connecting device (3) of claim 6, **characterized in that** said driver's compartment relating element (62) and said passenger's compartment relating element (63) do not abut in any tilting angle.

8. Space-connecting device (3) of claim 6-7, **characterized in that** said bulge of said driver's compartment relating element comprises an end that is connected to a first flexible fingertip-shaped element (68), that said bulge of said passenger's compartment relating element (63) comprises an end that is connected to a second flexible fingertip-shaped element (68), and that said first and second fingertip-shaped elements (68) are adapted to abut at said tilting of said driver's compartment (2), in which said first and second flexible fingertip-shaped element (68) preferably comprise rubber.

9. Space-connecting device (3) of claim 1-8, **characterized in that** said space-connecting device (3) comprises a collar (208), said collar comprising a collar upper face (218) and having a U-shaped transverse profile, in which said collar (208) is adapted for being mounted on a front wall (34) of the passenger's compartment (4), in which the collar upper face (218) is situated under the flexible window (76), in which the flexible window (76) and the collar upper face (218) preferably touch in a skimming way when the driver's compartment (2) is in a non-tilting position.

10. Space-connecting device (3) of claim 1-9, **characterized in that** said space-connecting device (3) comprises a draining system that is adapted for guiding water from the roof that is part of said passenger compartment means (1), in which said draining system comprises a tank (54), in which said roof is in a curvature, in which a upper portion of said roof is situated in a zone defined by the middle of said roof according to a longitudinal direction of the passenger compartment means (1), and a lower portion of said roof is situated in the zone defined by an edge of said roof, in which said curvature between said upper portion and said lower position evolves with gradual inclination, in which said draining system comprises a dam (51), in which said dam (51) comprises raised portion and extends in a direction essentially transverse to the longitudinal direction, and in which said dam (51) is adapted for guiding water from the roof to said collector (54).

11. A passenger transport means (1) comprising a driver's compartment (2), a passenger's compartment (4) and the space-connecting device (3) according to claim 1, in which said space-connecting device (3) is adapted for connecting a first opening of said driver's compartment (2) to a second opening of said passenger's compartment (4), in which said driver's compartment (2) and said passenger's compartment (4) are attached to one and the same chassis (6) of said passenger transport means (1), and in which said driver's compartment (2) is arranged tilting and is of the type of cab-over-engine.

## Patentansprüche

1. Raumverbindungsvorrichtung (3) für ein Personentransportmittel (1), umfassend eine Fahrerkabine (2) und eine Fahrgastkabine (4), wobei die Raumverbindungsvorrichtung (3) zum Verbinden einer ersten Öffnung der Fahrerkabine (2) mit einer zweiten Öffnung der Fahrgastkabine (4) geeignet ist, wobei die Fahrerkabine (2) und die Fahrgastkabine (4) an einem und demselben Fahrgestell (6) des Personentransportmittels (1) befestigt sind, wobei die Fahrerkabine (2) kippbar angeordnet und vom Typ eines Frontlenkers ist, wobei die Raumverbindungsvorrichtung (3) ein Adapterfenster (37) umfasst, wobei das Adapterfenster (37) ein flexibles Fenster (76) umfasst, das geeignet ist, um in der Nähe der ersten Öffnung angebracht zu sein, wobei das flexible Fenster (76) umlaufend die erste Öffnung und die zweite Öffnung verschließt,
**dadurch gekennzeichnet, dass** das Adapterfenster (37) keilförmig ist, bevorzugt in einem Winkel α zwischen 1 Grad und 35 Grad, besonders bevorzugt zwischen 2 Grad und 20 Grad, und **dass** das flexible Fenster (76) einen flexiblen Finger (82, 83, 84, 85) umfasst, um eine durch das flexible Fenster (76) realisierte Verbindung frei von Staub und Wasser zu halten.

2. Raumverbindungsvorrichtung (3) nach Anspruch 1, **dadurch gekennzeichnet, dass** das flexible Fenster (76) aus einem flexiblen Material, bevorzugt Gummi, hergestellt ist, dass das flexible Fenster (76) mit einer profilbezogenen Vertiefung (86) und/oder eine profilbezogene Ausbuchtung (87) versehen ist, die zur Befestigung an einem Fensterprofil (80) geeignet ist, wobei das Fensterprofil (80) bevorzugt aus Metall hergestellt ist.

3. Raumverbindungsvorrichtung (3) nach Anspruch 1 oder 2, wobei das flexible Fenster (76) aus einem flexiblen Material, bevorzugt Gummi, hergestellt ist, **dadurch gekennzeichnet, dass** das flexible Fenster selbsttragend ist, vorzugsweise bei dem das Adapterfenster (37) einen verstärkenden Innenfinger (204, 205) umfasst, der aus dem gleichen flexiblen Material hergestellt ist, wobei der Innenfinger (204, 205) bevorzugt als fester Bestandteil des flexiblen Fensters (76) hergestellt ist.

4. Raumverbindungsvorrichtung (3) nach Anspruch 1-3, **dadurch gekennzeichnet, dass** das flexible Fenster (76) einen flüssigkeitsführenden Finger (202) umfasst, der bezüglich der Fahrerkabine (2) und der Fahrgastkabine freisteht (4) und zum Führen von Flüssigkeit gemäß einer Richtung quer zu dem Personentransportmittel (1) ist geeignet.

5. Raumverbindungsvorrichtung (3) nach Anspruch 1-4, **dadurch gekennzeichnet, dass** das Adapterfenster (37) ein stoßfestes Element (77) umfasst, weiter bevorzugt mit vier stoßfesten Elementen (77).

6. Raumverbindungsvorrichtung (3) nach Anspruch 1-5, wobei die Raumverbindungsvorrichtung ein Labyrinth (36) umfasst, das geeignet ist, um die Verbindung der ersten Öffnung mit der zweiten Öffnung zu schützen, **dadurch gekennzeichnet, dass** das Labyrinth (36) umfasst: ein die Fahrerkabine betreffendes Element (62) und ein die Fahrgastkabine betreffendes Element (63),
- wobei das die Fahrerkabine betreffende Element (62) an einer ersten Seitenwandkante und/oder einer zweiten Seitenwandkante und/oder einer ersten Dachkante und/oder einer Rückwandkante der Fahrerkabine (2) befestigt ist und eine Ausbuchtung umfasst, die sich zumindest teilweise über die Verbindung erstreckt;
- wobei das die Fahrgastkabine betreffende Element (63) an einem dritten Seitenwandrand und/oder einem vierten Seitenwandrand und/oder einem zweiten Dachrand und/oder einem vorderen Wandrand der Fahrgastkabine (4) befestigt ist und eine Ausbuchtung umfasst, die sich zumindest teilweise über die Verbindung erstreckt.

7. Raumverbindungsvorrichtung (3) nach Anspruch 6, **dadurch gekennzeichnet, dass** das die Fahrerkabine betreffende Element (62) und das die Fahrgastkabine betreffende Element (63) in keinem Neigungswinkel aneinanderstoßen.

8. Raumverbindungsvorrichtung (3) nach Anspruch 6-7, **dadurch gekennzeichnet, dass** die Ausbuchtung des die Fahrerkabine betreffenden Elements ein Ende umfasst, das mit einem ersten flexiblen fingerspitzenförmigen Element (68) verbunden ist, dass das die Ausbuchtung der Fahrgastkabine betreffende Bezugselement (63) ein Ende umfasst, das mit einem zweiten flexiblen fingerspitzenförmigen Element (68) verbunden ist, und dass das erste und das zweite fingerspitzenförmige Element (68) geeignet sind, um beim Kippen der Fahrerkabine (2) anzuliegen, wobei das erste und das zweite flexible fingerspitzenförmige Element (68) bevorzugt Gummi umfassen.

9. Raumverbindungsvorrichtung (3) nach Anspruch 1-8, **dadurch gekennzeichnet, dass** die Raumverbindungsvorrichtung (3) einen Kragen (208) umfasst, wobei der Kragen eine Kragenoberseite (218) umfasst und ein U-förmiges Querprofil aufweist, wobei der Kragen (208) dazu geeignet ist, um an einer Vorderwand (34) der Fahrgastkabine (4) angebracht zu sein, wobei die Kragenoberseite (218) unter dem flexiblen Fenster (76) angeordnet ist, wobei das flexible Fenster (76) und die Kragenoberseite (218) sich vorzugsweise gleitend berühren, wenn die Fahrerkabine (2) in einer kippsicheren Position angeordnet ist.

10. Raumverbindungsvorrichtung (3) nach Anspruch 1-9, **dadurch gekennzeichnet, dass** die Raumverbindungsvorrichtung (3) ein Abflusssystem umfasst, das geeignet ist, um Wasser von dem Dach abzuleiten, das Teil des Fahrgastkabinenmittel (1) ist, wobei das Abflusssystem einen Tank (54) umfasst, wobei das Dach eine Krümmung aufweist, wobei ein oberer Abschnitt des Daches in einer Zone angeordnet ist, die durch die Mitte des Daches gemäß einer Längsrichtung des Fahrgastkabinenmittels definiert ist (1), und ein unterer Abschnitt des Daches in der Zone angeordnet ist, die durch eine Kante des Daches definiert ist, wobei sich die Krümmung zwischen dem oberen Abschnitt und der unteren Position mit gradueller Neigung entwickelt, wobei das Abflusssystem einen Damm umfasst (51), wobei der Damm (51) einen erhöhten Abschnitt umfasst und sich in einer im Wesentlichen quer zur Längsrichtung verlaufenden Richtung erstreckt, und wobei der Damm (51) geeignet ist, um Wasser vom Dach zu dem Sammler (54) zu leiten.

11. Personentransportmittel (1) umfassend einer Fahrerkabine (2), eine Fahrgastkabine (4) und die Raumverbindungsvorrichtung (3) nach Anspruch 1, wobei die Raumverbindungsvorrichtung (3) zum Verbinden einer ersten Öffnung der Fahrerkabine (2) mit einer zweiten Öffnung der Fahrgastkabine (4) geeignet ist, wobei die Fahrerkabine (2) und die Fahrgastkabine (4) an einem und demselben Fahrgestell (6) des Personentransportmittels (1) befestigt sind und wobei die Fahrerkabine (2) kippbar angeordnet und vom Typ Frontlenkers ist.

## Revendications

1. Dispositif de connexion d'espace (3) pour un moyen de transport de passagers (1) comprenant un compartiment conducteur (2) et un compartiment de passagers (4), dans lequel ledit dispositif de connexion d'espace (3) est adapté pour connecter une première ouverture dudit compartiment conducteur (2) à une seconde ouverture dudit compartiment passagers (4), dans laquelle ledit compartiment conducteur (2) et ledit compartiment passagers (4) sont fixés sur un même châssis (6) dudit moyen de transport de passagers (1), dans lequel ledit compartiment conducteur (2) est agencé basculant et est du type cabine avancée, dans lequel ledit dispositif de connexion d'espace (3) comprend une fenêtre adaptatrice (37), dans lequel ladite fenêtre adaptatrice (37) comprend une fenêtre flexible (76) qui est adaptée pour être fixée à proximité de ladite première ouverture, dans laquelle ladite fenêtre flexible (76) ferme circonférentiellement ladite première ouverture et ladite seconde ouverture, **caractérisée en ce que** ladite fenêtre adaptatrice (37) est en forme de coin, préférentiellement dans un angle α compris entre 1 degré et 35 degrés, plus préférentiellement entre 2 degrés et 20 degrés, et **en ce que** ladite fenêtre flexible (76) comprend un doigt flexible (82, 83, 84, 85) pour maintenir une connexion réalisée par ladite fenêtre flexible (76) exempte de poussière et d'eau.

2. Dispositif de connexion d'espace (3) selon la revendication 1, **caractérisé en ce que** ladite fenêtre flexible (76) est constituée d'un matériau flexible, préférentiellement du caoutchouc, que ladite fenêtre flexible (76) est pourvue d'un profil relatif à l'indentation (86) et/ou un profilé relatif au renflement (87) adapté pour être fixé à un profilé de fenêtre (80), dans lequel ledit profilé de fenêtre (80) est préférentiellement réalisé en métal.

3. Dispositif de connexion d'espace (3) selon la revendications 1 ou 2, dans lequel ladite fenêtre flexible (76) est constituée d'un matériau flexible, de préférence du caoutchouc, **caractérisé en ce que** ladite fenêtre flexible est autoportante, dans lequel ladite fenêtre adaptatrice (37) comprend préférentiellement un doigt intérieur de renfort (204, 205) qui est fait du même matériau souple, dans lequel ledit doigt intérieur (204, 205) est fait préférentiellement partie intégrante de la fenêtre souple (76).

4. Dispositif de connexion d'espace (3) selon les revendications 1 à 3, **caractérisé en ce que** ladite fenêtre flexible (76) comprend un doigt de guidage de liquide (202) qui est autonome par rapport audit compartiment conducteur (2) et audit compartiment de passagers (4) et est adapté à guider du liquide selon une direction transversale audit moyen de transport de passagers (1).

5. Dispositif de connexion d'espace (3) selon les revendications 1 à 4, **caractérisé en ce que** ladite fenêtre adaptatrice (37) comprend un élément absorbant les chocs (77), avec plus préférablement quatre éléments absorbant les chocs (77).

6. Dispositif de connexion d'espace (3) selon les revendications 1 à 5, dans lequel ledit dispositif de connexion à l'espace comprend un labyrinthe (36) adapté pour protéger ladite connexion de la première ouverture avec la seconde ouverture, **caractérisé en ce que** ledit labyrinthe (36) comprend un élément (62) relatif au compartiment conducteur et un élément (63) relatif au compartiment de passagers,
- dans lequel ledit élément (62) relatif au compartiment conducteur est fixé à une première arête de paroi latérale et/ou à une deuxième arête de paroi latérale et/ou à une première arête de toit et/ou à une arête de paroi arrière dudit compartiment conducteur (2) et comprend un renflement s'étendant au moins partiellement sur ladite connexion;
- dans lequel ledit élément (63) relatif au compartiment de passagers est fixé à une troisième arête de paroi latérale et/ou à une quatrième arête de paroi latérale et/ou à une deuxième arête de toit et/ou à une arête de paroi frontale dudit compartiment de passagers (4) et comprend un renflement s'étendant au moins partiellement sur ladite connexion.

7. Dispositif de connexion d'espace (3) selon la revendication 6, **caractérisé en ce que** ledit élément (62) relatif au compartiment conducteur et ledit élément (63) relatif au compartiment de passagers ne se touchent à aucun angle d'inclinaison.

8. Dispositif de connexion d'espace (3) selon les revendications 6-7, **caractérisé en ce que** ledit renflement dudit élément relatif au compartiment conducteur comprend une extrémité qui est connectée à un premier élément flexible en forme de bout de doigt (68), que ledit renflement dudit élément (63) relatif au compartiment de passagers comprend une extrémité qui est reliée à un deuxième élément flexible en forme de bout de doigt (68), et **en ce que** lesdits premier et deuxième éléments en forme de bout de doigt (68) sont adaptés pour venir en butée au niveau dudit basculement dudit compartiment conducteur (2), dans lequel lesdits premier et deuxième éléments flexibles en forme de bout de doigt (68) comprennent préférentiellement du caoutchouc.

9. Dispositif de connexion d'espace (3) selon les revendications 1 à 8, **caractérisé en ce que** ledit dispositif de connexion d'espace (3) comprend un collier (208), ledit collier comprenant une face supérieure de collier (218) et présentant un profil transversal en forme de U, dans laquelle ledit collier (208) est adapté pour être monté sur une paroi avant (34) du compartiment de passagers (4), dans laquelle la face supérieure du collier (218) est disposée sous la fenêtre souple (76), dans laquelle la fenêtre souple (76) et la face supérieure de collier (218) se touchent préférentiellement de manière rasante lorsque le compartiment conducteur (2) est en position non basculante.

10. Dispositif de connexion d'espace (3) selon les revendications 1 à 9, **caractérisé en ce que** ledit dispositif de connexion d'espace (3) comprend un système de drainage qui est adapté pour guider l'eau depuis le toit qui fait partie dudit moyen de transport de passagers (1), dans lequel ledit système de drainage comprend un réservoir (54), dans lequel ledit toit est dans une courbure, dans lequel une partie supérieure dudit toit est disposée dans une zone définie par le centre dudit toit selon une direction longitudinale du moyen de transport de passagers (1), et une partie inférieure dudit toit est disposée dans la zone définie par une arête dudit toit, dans laquelle ladite courbure entre ladite partie supérieure et ladite position inférieure évolue avec une inclinaison progressive, dans laquelle ledit système de drainage comprend un barrage (51), dans lequel ledit barrage (51) comprend une partie surélevée et s'étend dans une direction essentiellement transversale à la direction longitudinale, et dans lequel ledit barrage (51) est adapté pour guider l'eau du toit vers ledit collecteur (54).

11. Moyen de transport de passagers (1) comprenant un compartiment conducteur (2), un compartiment de passagers (4) et un dispositif de connexion d'espace (3) selon la revendication 1, dans lequel ledit dispositif de connexion d'espace (3) est adapté pour connecter une première ouverture dudit compartiment conducteur (2) à une seconde ouverture dudit compartiment de passagers (4), dans laquelle ledit compartiment conducteur (2) et ledit compartiment de passagers (4) sont fixés sur un même châssis (6) desdits moyens de transport de passagers (1), dans lequel ledit compartiment conducteur (2) est agencé basculant et est du type cabine avancée.
